# EUROPEAN PATENT SPECIFICATION

(11) **EP 3 925 189 B1**
(45) Date of publication and mention of the grant of the patent: **05.11.2025**
(21) Application number: 20774721.3
(22) Date of filing: 18.03.2020
(51) Int. Cl.: H04L 9/40, H04L 69/40

(54) **METHOD AND DEVICE FOR PROVIDING AUTHENTICATION IN NETWORK-BASED MEDIA PROCESSING (NBMP) SYSTEM**
VERFAHREN UND VORRICHTUNG ZUR AUTHENTIFIZIERUNG IN NETZWERKBASIERTEN MEDIENVERARBEITUNGS (NETWORK-BASED MEDIA PROCESSING -NBMP)-SYSTEMEN
PROCÉDÉ ET DISPOSITIF PERMETTANT DE FOURNIR UNE AUTHENTIFICATION DANS UN SYSTÈME DE TRAITEMENT MULTIMÉDIA BASÉ SUR UN RÉSEAU (NETWORK-BASED MEDIA PROCESSING -NBMP)

(30) Priority: 18.03.2019 US 201962819837 P
(43) Date of publication of application: 22.12.2021
(73) Proprietor: Samsung Electronics Co., Ltd., Suwon-si, Gyeonggi-do 16677 (KR)
(72) Inventor: BAE, Jaehyeon, Suwon-si, Gyeonggi-do 16677 (KR); YANG, Hyunkoo, Suwon-si, Gyeonggi-do 16677 (KR); YIP, Eric, Suwon-si, Gyeonggi-do 16677 (KR)
(74) Representative: Gulde & Partner
(86) International application number: PCT/KR2020/003672
(87) International publication number: WO 2020/190016

(56) References cited:
- US-A1- 2014 188 978
- US-A1- 2016 261 900
- US-A1- 2019 028 691
- US-B2- 7 941 518
- YU YOU: "[NBMP] Authentication Descriptor", no. m46351, 13 January 2019 (2019-01-13), XP030214971, Retrieved from the Internet <URL:http://phenix.int-evry.fr/mpeg/doc_end_user/documents/125_Marrakech/wg11/m46351-v2-NBMP_Authentication_DescriptorV2.docx.zip NBMP_Authentication_DescriptorV2.docx> [retrieved on 20190113]
- ISO: "Information technology ? Coded representation of immersive media? Part 8: Network Based Media Processing", ISO/IEC JTC1/SC29/WG11 DOCUMENT W18236. ISO 23090-8, 1 January 2018 (2018-01-01), XP055741263, Retrieved from the Internet <URL:www.iso.org> [retrieved on 20201019]
- PANOS KUDUMAKIS: "121st MPEG Gwangju", 6 February 2018 (2018-02-06), pages 1 - 6, XP009523911, Retrieved from the Internet <URL:https://code.soundsoftware.ac.uk/attachments/download/2329/1PanosGwangju121MPEGMeetingReport.pdf>

## Description

### [Technical Field]

The disclosure relates to a method of performing authentication by a network-based media processing, NBMP, workflow manager. The disclosure also relates to a network-based media processing, NBMP, workflow manager network entity in a NBMP system, a method of performing authentication by a network-based media processing, NBMP, source network entity in a NBMP system, and a network-based media processing, NBMP, source network entity in a NBMP system. The disclosure discloses a method and a device for providing authentication in a network-based media processing (NBMP) system.

### [Background Art]

Media processing goes on advancing to offer more complicated tasks and services. Processing and resources over the network are required to provide state-of-the-art immersive media experience to end users while addressing the demand for evolved multimedia services. Multimedia service providers and network/cloud service providers cooperate to provide customized immersive media services to customers. However, multimedia service providers face the need for applying their services to various cloud/network service providers for customers. Cloud/service providers define their own unique Application programming interface (API) to assign resources to customers.

Thus, a need exists for providing an integrated scheme for carrying out media processing over any internet protocol (IP) network and cloud platform. NBMP provides such an integrated scheme. NBMP defines interface, media, and metadata formats to facilitate any type of media processing over networks/clouds. Document 'YU YOU: "[NBMP] Authentication Descriptor", 125. MPEG MEETING; 20190114-20190118: MARRAKECH (MOTION PICTURE EXPERT GROUP OR ISO/IEC JTC1/SC29/WG11), no. m46351 13 January 2019 (2019-01-13), XP030214971, Retrieved from the Internet: URL:http://phenix.int-evry.fr/mpeg/doc_end user/documents/125 Marrakech/wg11/m46351-v2-NBMP Authentication_DescriptorV2.docx.zip NBMP Authentication_DescriptorV2.docx [retrieved on 2019-01-13]' discloses an NBMP authentication descriptor. Document 'YU YOU: "Nokia input to NBMP WD", 124. MPEG MEETING; 20181008 - 20181012 MACAO: (MOTION PICTURE EXPERT GROUP OR ISO/IEC JTC1/SC29/WG11), no. m45182 10 October 2018(2018-10-10), XP030215885, Retrieved from the Internet: URL:http://phenix.int-evry.fr/mpeg/doc_end user/documents/124 Macao/wg11/m45182-v1-m45182.zip m45182/WD of NBMP_Nokia.docx [retrieved on 2018-10-10]' discloses that Network-Based Media Processing framework defines the interfaces including both data formats and APIs among the entities connected through the digital networks for media processing for the users to access the entities and configure their operations remotely for efficient intelligent processing without human intervention.

The above information is presented as background information only to assist with an understanding of the disclosure. No determination has been made, and no assertion is made, as to whether any of the above might be applicable as prior art with regard to the disclosure.

### [Disclosure of Invention]

### [Solution to Problem]

Aspects of the disclosure are to address at least the above-mentioned problems and/or disadvantages and to provide at least the advantages described below. Accordingly, an aspect of the disclosure is to provide an authentication method for accessing protected resources/functions in a network-based media processing (NBMP) system and a device for the same as defined in the appended claims.

Additional aspects will be set forth in part in the description which follows and, in part, will be apparent from the description, or may be learned by practice of the presented embodiments.

### [Advantageous Effects of Invention]

In accordance with an aspect of the disclosure, the authentication-related information is provided. The authentication-related information includes flag information indicating whether the function requires authentication for access and is included in an authorization descriptor of the workflow description.

As proposed herein, the NBMP system uses a procedure and parameters for supporting authentication for access to protected resources/functions, thereby enabling efficient authentication on protected resources/functions.

Other aspects, advantages, and salient features of the disclosure will become apparent to those skilled in the art from the following detailed description, which, taken in conjunction with the annexed drawings, discloses various embodiments of the disclosure.

### [Brief Description of Drawings]

The above and other aspects, features, and advantages of certain embodiment of the disclosure will be more apparent from the following description taken in conjunction with the accompanying drawings, in which:
FIG. 1 illustrates a configuration of a network-based media processing (NBMP) system according to an embodiment of the disclosure;
FIG. 2 illustrates an NBMP system for performing NBMP authentication according to an embodiment of the disclosure;
FIG. 3 illustrates a method for using protected services/resources in an NBMP system according to an embodiment of the disclosure;
FIG. 4A illustrates a method for using protected services/resources in an NBMP system according to an embodiment of the disclosure;
FIG. 4B illustrates a method for using protected services/resources in an NBMP system according to an embodiment of the disclosure;
FIG. 5 illustrates a procedure of performing authentication on an NBMP service by an NBMP system according to an embodiment of the disclosure;
FIG. 6 illustrates a procedure of performing authentication on an NBMP service by an NBMP system according to an embodiment of the disclosure;
FIG. 7 illustrates a procedure of performing authentication on an NBMP service by an NBMP system according to an embodiment of the disclosure;
FIG. 8 illustrates a procedure of performing authentication on an NBMP service by an NBMP system according to an embodiment of the disclosure;
FIG. 9 illustrates a method of performing authentication by a first network entity in an NBMP system according to an embodiment of the disclosure;
FIG. 10 illustrates a method of performing authentication by a second network entity in an NBMP system according to an embodiment of the disclosure; and
FIG. 11 illustrates a structure of a network entity according to an embodiment of the disclosure.

Throughout the drawings, like reference numerals will be understood to refer to like parts, components, and structures.

### [Mode for the Invention]

The following description with reference to the accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made. In addition, descriptions of well-known functions and constructions may be omitted for clarity and conciseness.

Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

For the same reasons, some elements may be exaggerated or schematically shown. The size of each element does not necessarily reflect the real size of the element. The same reference numeral is used to refer to the same element throughout the drawings.

Advantages and features of the disclosure, and methods for achieving the same may be understood through the embodiments to be described below taken in conjunction with the accompanying drawings. The embodiments disclosed herein are provided only to inform one of ordinary skill in the art of the category of the disclosure. The disclosure is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide operations for executing the functions described in connection with a block(s) in each flowchart.

Further, each block may represent a module, segment, or part of a code including one or more executable instructions for executing a specified logical function(s). Further, it should also be noted that in some replacement execution examples, the functions mentioned in the blocks may occur in different orders. For example, two blocks that are consecutively shown may be performed substantially simultaneously or in a reverse order depending on corresponding functions.

As used herein, the term "unit" means a software element or a hardware element, such as a field-programmable gate array (FPGA) or an application specific integrated circuit (ASIC). A unit plays a certain role. However, the term "unit" is not limited as meaning a software or hardware element. A 'unit' may be configured in a storage medium that may be addressed or may be configured to reproduce one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. A function provided in an element or a 'unit' may be combined with additional elements or may be split into sub elements or sub units. Further, an element or a 'unit' may be implemented to reproduce one or more central processing units (CPUs) in a device or a security multimedia card. According to embodiments of the disclosure, a "...unit" may include one or more processors.

Hereinafter, the operational principle of the disclosure is described below with reference to the accompanying drawings. When determined to make the subject matter of the disclosure unclear, the detailed description of the known functions or configurations may be skipped. The terms as used herein are defined considering the functions in the disclosure and may be replaced with other terms according to the intention or practice of the user or operator. Therefore, the terms should be defined based on the overall disclosure.

Hereinafter, terms denoting broadcast information, terms denoting control information, communication coverage-related terms, terms (e.g., an event) denoting state variations, terms denoting network entities, terms denoting messages, or terms denoting device components are provided solely for illustration purposes. The disclosure is not limited to the terms, and other terms equivalent in technical concept may also be used.

As used herein, terms for identifying access nodes, terms denoting network entities, terms denoting messages, terms denoting inter-network entity interfaces, and terms denoting various pieces of identification information are provided as an example for ease of description. Thus, the disclosure is not limited to the terms, and the terms may be replaced with other terms denoting objects with equivalent technical meanings.

For ease of description, the disclosure adopts terms and names defined in network based media processing (NBMP) system-related standards. However, the disclosure is not limited by such terms and names and may be likewise applicable to multimedia systems conforming to other standards and performing the same or similar functions as those of the NBMP system.
- Function Description: description of the details of a Media Processing Function, such as input and output description details, requested media processing, requirements, etc.
- Function Repository: storage place where NBMP functions are retrieved from by an NBMP workflow manager or NBMP source.
- Media Processing Entity: entity that runs one or more media processing task(s)
- Media Resource: media data that is captured by the Media Source and is sent to the Media Processing Entities of the NBMP system.
- Media Sink: entity that consumes the output of the NBMP Workflow through existing delivery methods
- Media Source: entity that provides the raw media content to be processed, such as a digital camera, a microphone, an encoder, or persistent storage.
- NBMP Format: media format that is exchanged between the Media Source and the Media Processing Entities in an NBMP system, and between individual Media Processing Entities inside the NBMP system.
- NBMP Function: Implementation of a standalone and self-contained media processing operation and the corresponding description of that operation
- NBMP Publish Format: media format of the content that is sent from Media Processing Entity to Media Sink.
- NBMP Source: entity that provides triggers and describes media processing in the network
- NBMP system: system for processing media across one or more processing entities in the network and consisting of a Media Source, a NBMP Source, a NBMP Workflow Manager, a Function Repository, Media Processing Entity(ies) and Media Sink(s).
- NBMP workflow: a graph of one or more connected Task(s) that achieve the requested media processing
- NBMP Workflow Manager: entity that provisions tasks and connects them to create a complete workflow based on a workflow description and function descriptions
- Supplementary Information: metadata or auxiliary information related to the media data or media processing operations
- Task: runtime instance of NBMP Function that gets executed inside a Media Processing Entity.
- Task Description: description of the runtime details of a Task, such as input and output description details, requirements, configuration information etc.
- Workflow Description: description of the details of the media processing, such as input and output description details, requested media processing, requirements etc. for the workflow

In the disclosure, terms modified with the prefix "NBMP" such as NBMP function, NBMP workflow, and NBMP Workflow Manager may be simply referred to as function, workflow, and Workflow Manager. In the disclosure, each component of the NBMP system may be referred to as a network entity. For example, NBMP Workflow Manager may be referred to as a first network entity, and NBMP Source may be referred to as a second network entity. In the disclosure, NBMP system may be referred to as a multimedia system.

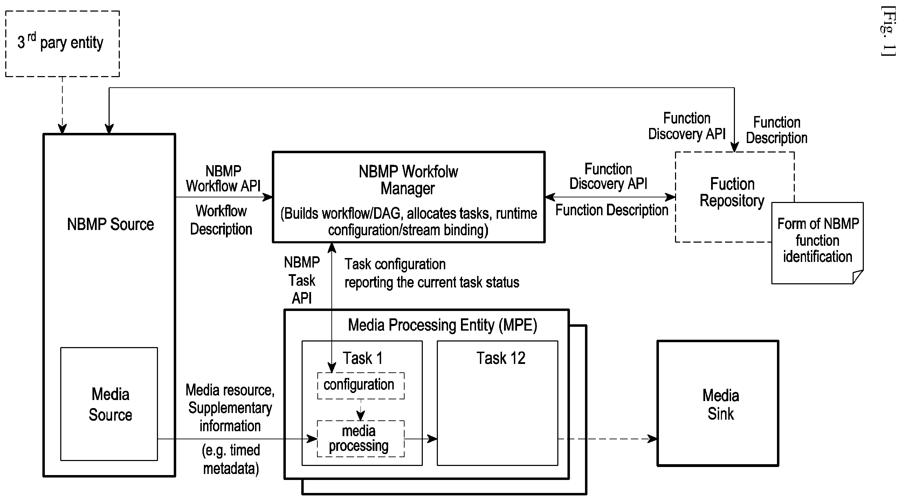

FIG. 1 illustrates a configuration of an NBMP system according to an embodiment of the disclosure.

Referring to FIG. 1, an NBMP system denotes a system capable of initiating and controlling media processing over a network. The NBMP system may perform communication using an interface including a data format and Application programming interfaces (APIs) between entities connected via a network for media processing. The APIs may include, e.g., the following APIs:
- workflow API (NBMP workflow API): an API used by the NBMP source to generate and control media processing Workflow
- Function Discovery API (NBMP Function Discovery API): an API providing a means for a workflow manager and/or NBMP source to discover media processing functions that may be loaded as part of media processing workflow.
- Task API (NBMP Task API): an API used by the workflow manager to configure and monitor a task in runtime.

Hereinafter, an NBMP service provided by an NBMP system and configuration of the NBMP system are described with reference to FIG. 1, as an example. Referring to FIG. 1, an NBMP system may include an NBMP source, an NBMP workflow manager, a function repository, a media processing entity(ies) and/or a media sink(s). The NBMP source may include a media source as shown in FIG. 1 but, according to an embodiment of the disclosure, the media source may be excluded from the NBMP source. The NBMP system may communicate with an external entity (device), e.g., a third party entity.

The NBMP source may include basic information for generating a service via a workflow description when the service is requested to begin.

Table 1 below represents an example of the workflow description. The workflow description may be transferred from the NBMP source to the workflow manager. The workflow description describes details, such as input and output data for workflow, required functions, or requirements.

**[Table 1]**

| **Descriptor** | **Description** | |
|---|---|---|
| General | Parameters of the General descriptors described in section 9.1 are applicable except the following: | |
| | -InputPorts | |
| | -OutputPorts | |
| Input | Parameters of the Input descriptor described in section 9.2 are applicable | |
| Output | Parameters of the Output descriptor described in section 9.3 are applicable | |
| Processing | Parameters of the Processing descriptor described in section 9.4 are applicable except the following: | |
| | -URL | |
| Requirement | Parameters of the Requirement descriptor described in section 9.5 are applicable with below additional Information | |
| | Requirements | Details |
| | Processor requirements | Indicates minimum processing capabilities to any media processing entity that will be provisioned in the workflow |
| | CPU Cores | Indicates minimum number of CPU cores to be allocated to any media processing entity that will be provisioned in the workflow |
| | GPU | Indicates minimum number of GPUs to be allocated to any media processing entity that will be provisioned in the workflow |
| | Aggregated storage | Indicates aggregated storage for all media processing entities allocated for the workflow |
| | | |
| Client Assistance | Parameters of the Client Assistance descriptor described in section 9.8 are applicable | |
| Failover | Parameters of the Failover descriptor described in section 9.9 are applicable | |
| Monitoring | Parameters of the Monitoring descriptor described in section 9.10 are applicable except the following: Variable | |
| Assertion | Parameters of the Assertion descriptor described in section 9.11 are applicable | |
| Reporting | Parameters of the Reporting descriptor described in section 9.12 are applicable | |
| Notification | Parameters of the Notification descriptor described in section 9.14 are applicable | |

Table 2 represents an example of workflow API resources. As shown in FIG. 1 for the NBMP system, the NBMP source may communicate with the workflow manager that constitutes media processing on NBMP, using the NBMP workflow API. The workflow API resources mean resources to be used by the workflow API. If the NBMP source transmits the workflow-description resource as shown in Table 2, details of all or some descriptors corresponding to a server (e.g., the workflow manager) may be obtained.

**[Table 2]**

| **API Resource** | **Resource Properties** |
|---|---|
| Workflow-description | InputDescriptor, OutputDescriptor, ProcessingDescriptor, RequirementDescriptor, ConfigurationDescriptor, DelayDescriptor, ClientAssistanceDescriptor, FailoverDescriptor, MonitoringDescriptor, AssertionDescriptor, ReportingDescriptor |

Table 3 represents example workflow API operations. The workflow API may be used by the NBMP source to allow the workflow manager to manage workflows. For example, workflow API operations as shown in Table 3 may be provided using workflow-description resources as shown in Table 2.

**[Table 3]**

| **API** | | | **Description** | **Request Parameters** | **Response Parameters** |
|---|---|---|---|---|---|
| CreateWork flow | | | Create a workflow | Workflow-descri Ption resource representation with all workflow specific descriptors | - Acknowledgement of workflow creation |
| | | | | | - Workflow Resource Id |
| | | | | | - Endpoint information where to send media data, metadata, and other information for processing |
| UpdateWor kflow | | | Update a previously created workflow | Updated workflow-description resource consisting of one or more workflow specific descriptors. The properties of individual descriptors themselves can be partially sent | - Acknowledgement of workflow update |
| | | | | | - Workflow Resource Id |
| | | | | | - Updated endpoint information where to send media data, metadata, and other information for processing |
| DeleteWork flow | | | Terminate a previously created workflow | Workflow Resource Id | - Acknowledgement of workflow termination |
| | | | | | - Workflow Resource Id |
| RetrieveWo rkflow | | | Retrieve a previously configured workflow | Workflow Resource Id | - Acknowledgement of workflow retrieval |
| | | | | | - Complete workflow-description resource representation |
| GetReports | | | Get reports for a previously configured workflow | - Workflow resource Id | |
| | | | | - Report Type (e.g., QoE, consumption, fedback, analysis) | - Workflow Resource Id |
| | | | | | - Detailed report for the requested report type |

The NBMP source receives a request and information from a 3rd party server or media source generating media and transfers the request and information to the workflow manager.

The workflow manager may generate a workflow for starting a service based on the information received via the NBMP source. The workflow manager may receive the position of a media processing entity (MPE), e.g., a virtual server, to assign a service function via, e.g., the operator's infrastructure manager and use the received position when generating a workflow. The service function (or workflow manager) may store information about the function in the NBMP function repository, assign a function according to a user service, or allocate a function requested by the user to the task in the MPE. If the workflow is generated, the workflow manager may transfer pieces of information, such as per-task configuration information, monitoring information, and/or information for controlling the operation of the basic task, e.g., reporting, via the task description including the pieces of information to each task.

Table 4 represents an example of the task description. Specifically, Table 4 below shows an example descriptor list applicable to the NBMP task. The NBMP task description may be provided using a set of descriptors.

**[Table 4]**

| **Descriptor** | **Description** |
|---|---|
| General | Parameters of the General descriptor defined in section 9.2 are applicable. To reference and link input sources with input port names and output port names at the time of task creation, the binding object is used to make references to the input streams. The Binding object contains the stream names or other parameters defined by the inputs and output. Workflow Manager needs to assign actual stream IDs and creates necessary ports if needed. The binding object is an object structure like {"bind:"name"}. |
| Input | Parameters of the Input descriptor defined in section 9.3 are applicable. |
| Output | Parameters of the Output descriptor defined in section 9.4 are applicable except the following: |
| | - Distribution Format |
| Processing | Parameters of the Processing descriptor defined in section 9.5 are applicable except the following: |
| | -Keywords |
| | -URL |
| | -TaskConnectionMap |
| Requirement | Parameters of the Requirements descriptor defined in section 9.6 are applicable. |
| Configuration | Parameters of the Configuration descriptor defined in section 9.7 are applicable. |
| Delay | Parameters of the Delay descriptor defined in section 9.8 are applicable. |
| Client Assistance | Parameters of the Client Assistance descriptor defined in section 9.9 are applicable. |
| Failover | Parameters of the Failover descriptor defined in section 9.10 are applicable. |
| Monitoring | Parameters of the Input descriptor defined in section 9.11 arc applicable. |
| Assertion | Parameters of the Assertion descriptor defined in section 9.12 are applicable. |
| Reporting | Parameters of the Reporting descriptor defined in section 9.13 are applicable. |
| Notification | Parameters of the Notification descriptor defined in section 9.14 are applicable. |

Table 5 represents an example task API resource. The task API defines an API for a configuration of media processing entities by the workflow manager. Task API resource means a resource to be used by the task API. The properties of the task resource are shown in Table 5 below.

**[Table 5]**

| **Property** | **Property Description** |
|---|---|
| General | Property representing the general descriptor as defined in 9.2 |
| Input | Property representing the input descriptor as defined in 9.3 |
| Output | Property representing the output descriptor as defined in 9.4 |
| Processing | Property representing the processing descriptor as defined in 9.5 |
| Requirement | Property representing the requirement descriptor as defined in 9.6 |
| Configuration | Property representing the configuration descriptor as defined in 9.7 |
| Delay | Property representing the delay descriptor as defined in 9.8 |
| Client Assistance | Property representing the client assistance descriptor as defined in 9.9 |
| Failover | Property representing the failover descriptor as defined in 9.10 |
| Monitoring | Property representing the monitoring descriptor as defined in 9.11 |
| Assertion | Property representing the assertion descriptor as defined in 9.12 |
| Reporting | Property representing the reporting descriptor as defined in 9.13 |
| Notification | Property representing the notification descriptor as defined in 9.14 |

Table 6 represents an example task API operation. Specifically, Table 6 shows the task configuration API. The workflow manager may configure media processing entities using the task configuration API.

**[Table 6]**

| **API** | **Description** | **Request Parameters** | **Response Parameters** |
|---|---|---|---|
| CreateTask | Provision to run a task inside the media processing entity | Representation of task resource defined above | -Acknowledgement of creating a task resource |
| | | | -Task Resource Id |
| | | | -Endpoint information where to send media data, metadata, and other information for processing |
| UpdateTask | Modify the task running inside the media processing entity | Representation of task resource with one or more task resource properties that the workflow manager intends to modify | -Acknowledgement of updating task resource |
| | | | -Task Resource Id |
| | | | -Updated information where to send media data, metadata, and other information for processing |
| GetTask | Retrieve task configuration information | Resource Id of the task resource whose information the workflow manager intends to retrieve | -Task Resource Id |
| | | | -Detailed resource representation of the task resource |
| DeleteTask | Request to de-provision the task running inside the media processing entity and terminate the media processing entity | Task Resource Id | -Acknowledgement of reception |
| | | | -Status of de-configuration request |

Further, the workflow manager, after generating the workflow, may notify the NBMP source of the physical position of the first function and/or task and the last task that transmits media when the media source starts a service, based on the information.

The NBMP source may commence a service based on the information received via the workflow manager after generating the workflow. The media source may transmit media data (media resource) in the address of the first server (e.g., the function/task) when the service starts), and the NBMP source may notify the NBMP sink of the physical position of the last function and task, thereby providing server information for starting the server. In the disclosure, NBMP sink may be referred to as a media sink.

The workflow manager may search for a function based on a function description configured based on, e.g., an NBMP function reference template, in the function repository and, upon generating a workflow, allocate the function to the task.

Table 7 represents an example NBMP function description. The NBMP function description may be provided using a set of descriptors as shown in Table 7.

**[Table 7]**

| **Descriptor** | **Description** |
|---|---|
| General | Parameters of the general descriptor defined in section 9.2 are applicable except the following: |
| | -Priority |
| | -Execution Time |
| Input | Parameters of the Input descriptor defined in section 9.3 are applicable |
| Output | Parameters of the Output descriptor defined in section 9.4 are applicable |
| Processing | - Parameters of the Processing descriptor defined in section 9.5 are applicable except the following: Start Time |
| | - TaskConnectionMapFor keywords: Keywords representing the functionality using which this function can be selected if they match the keywords sent by the NBMP source |
| Requirement | Parameters of the Requirements descriptor defined in section 9.6 are applicable |
| Configuration | Parameters of the Configuration descriptor defined in section 9.7 are applicable |
| Client Assistance | Parameters of the Client Assistance descriptor defined in section 9.9 are applicable |
| Monitoring | Parameters of the Monitoring descriptor defined in section 9.11 are applicable except the following: |
| | -Event |
| | -System |
| Assertion | Parameters of the Client Assistance descriptor defined in section 9.12 are applicable |

Table 8 represents example function discovery API resources. The function repository API may be used by the workflow manager and NBMP source to discover the NBMP function supported by the NBMP. These functions may be included in the function repository. These functions may be described in the function repository using the function reference template. The function discovery API resources mean resources to be used by the function repository API. The discovery resource may be used to configure a discovery operation. The structure of discovery resource shows different properties using what function may be discovered.

**[Table 8]**

| **Properties** | **Description** |
|---|---|
| Name | String using which functions can be searched. |
| Function Id | Unique identification of each function |

Table 9 represents example function discovery API operations. The function discovery API may be used by the workflow manager or NBMP source to discover available functions in the function repository. The function discovery API may be shown as shown in Table 9 using the search resource as shown in Table 8.

**[Table 9]**

| **API** | | | **Description** | **Request Parameters** | **Response Parameters** |
|---|---|---|---|---|---|
| DiscoverAllFu nctions | | | Discover all functions in the function repository | No properties sent along with search resource | All Functions registered at the function repository. Each function description contains the Function Id and function details. |
| DiscoverSpeci ficFunction | | | Discover a set of functions matching a given string | Name string sent along with search resource | All functions in the function repository whose name matches the given name string. Each function description contains the Function Id and function details. |

Various kinds of example NBMP descriptors are described below.

Table 10 represents an example general descriptor. Specifically, Table 10 shows a list of parameters in the descriptor. The general descriptor provides details for basic resource (e.g., workflow or task) included therein.

**[Table 10]**

| **Parameter Name** | **Description** | **Data Type** |
|---|---|---|
| ID | Provides a unique identification to the resource. | String |
| Name | Provides a name for identifying the resource. | String |
| Description | Provides a human readable description for the underlying resource. | String |
| Brand | Provides category information for the underlying resource | String |
| Priority | Provides priority information for the underlying resource. | Number |
| Execution Time | Provides execution time of the resource | String |
| InputPorts | Includes a map of port information where: | Map |
| | -Map key: Port Identifier | |
| | -Map value: Stream Id in InputDescriptorNote: One Stream id is mapped to one Port Id per workflow | |
| OutputPorts | Includes a map of port information where: | Map |
| | -Map key: Port Identifier | |
| | -Map value: Stream Id in OutputDescriptor Note: One Stream id is mapped to one Port Id per workflow | |

Table 11 represents an example input descriptor. The input descriptor provides input description details for basic resources.

**[Table 11]**

| **Parameter Name** | **Description** | **Data Type** |
|---|---|---|
| Media Parameters | Provides media parameters for resource consumption. The parameters include the following: | Object |
| | - Collection of media descriptions: Each media stream description includes: | |
| | - Stream Schema | |
| | - Stream Information | |
| | - Media Stream ID: ID to identify the media stream. Assigned by Workflow Manager. | |
| | - StreamName: String name assigned by NBMP Source | |
| | - Stream Tags: Array of keywordsBandwidth: Bandwidth of media stream | |
| | - Codec type: Type of codec for the underlying media | |
| | - Media Type: Type of media | |
| | - Clock rate: Codec clock rate | |
| | - Protocol: Protocol for delivery or access of media | |
| | - Origination: Location where the media will be sent from or the location from where the media can be fetched from. Such information may include: | |
| | - Caching server URL: URL location of the caching server where the media is residing (e.g., edge cache) | |
| | - External Server URL: Location of media at an external storage | |
| | Note: When Origination is missing, the Workflow Manager can act like the way of Metadata Parameters. When the workflow manager receives this Protocol information, it can take the responsibility of returning back with the protocol endpoint information of the appropriate media processing entity to the media source so media source can ingest media using that protocol | |
| Metadata Parameters | Provides metadata parameters for resource consumption. The parameters include the following: | Object |
| | - Collection of metadata descriptions: Each metadata stream description includes: | |
| | - Metadata schema | |
| | - Metadata Information | |
| | - Metadata Stream Id: ID to identify the content component i.e., metadata stream | |
| | - Metadata Type: Type of metadata. Possible values include: | |
| | - Timed: Indicates description for Timed metadata | |
| | - Non-Timed: Indicates description of non-timed static metadata | |
| | - Bandwidth: Bandwidth of metadata stream | |
| | - MetadataDictionary: Dictionary of static non-timed metadata. Dictionary contains a collection of key-value pairs. Each key represents the name of a static metadata parameter and the corresponding value indicates the value of that metadata parameter. | |
| | Note: This is only applicable for static non-timed metadata | |
| | - Protocol: Ingest protocol for timed metadata. Example: HTTP. When the workflow manager receives this information, it takes the responsibility of returning back with the protocol endpoint information of the appropriate media processing entity to the media source so media source can ingest metadata using that protocol. | |
| | Note: | |
| | This is only applicable for timed metadata | |
| | - MetadatalngestFonnat: Format of timed metadata. Example: JSON, XML | |
| | Note: Metadata parameters from MPEG MORE and MPEG-V are applicable | |

Table 12 represents an example output descriptor. The output descriptor provides output description details for basic resource.

**[Table 12]**

| **Parameter Name** | **Description** | | **Data Type** |
|---|---|---|---|
| Media Parameters | Provides media parameters for production by the resource. The parameters include the following: | | Object |
| | - Array of media descriptions: Each media stream description includes: | | |
| | | •Stream schema | |
| | | •Stream information | |
| | - Media Stream ID: ID to identify the media stream. Assigned by Workflow Manager. | | |
| | - StreamName: String name assigned by NBMP Source | | |
| | - Stream Tags: Array of keywordsCodec type: Type of codec | | |
| | - Media Type: Type of media | | |
| | - Bandwidth: Bandwidth of media stream | | |
| | - Clock rate: Codec clock rate | | |
| | - Protocol: Protocol for delivery of media type | | |
| | - Destination: Where to send the output to | | |
| | - Publish Format: Desired publish format | | |
| Metadata Parameters | Provides metadata parameters for production by the resource. The parameters include the following: | | Object |
| | - Array of metadata descriptions: Each metadata stream description includes: | | |
| | | •Metadata schema | |
| | | •Metadata information | |
| | - Metadata Stream Id: ID to identify the content component i.e., metadata stream | | |
| | - Metadata Type: Type of metadata | | |
| | - Timed: Indicates description for Timed metadata | | |
| | - Non-Timed: Indicates description of non-timed static metadata | | |
| | - Bandwidth: Bandwidth of metadata stream | | |
| | - MetadataDictionary: Dictionary of static nontimed metadata. Dictionary contains a collection of key-value pairs. Each key represents the name of a static metadata parameter and the corresponding value indicates the value of that metadata parameter. | | |
| | Note: This is only applicable for static non-timed metadata | | |
| | - Protocol: Distribution protocol for timed metadata. Example: HTTP. When the workflow manager receives this information, it takes the responsibility of returning back with the protocol endpoint information of the appropriate media processing entity to the media source so media source can ingest metadata using that protocol. | | |
| | Note: This is only applicable for timed metadata | | |
| | - Publish Format: Desired publish format of timed metadata. E.g., JSON, XML | | |
| | Note: Metadata parameters from MPEG MORE and MPEG-V are applicable | | |
| Publish Format | Desired output publish format | | String |

Table 13 represents an example processing descriptor. The processing descriptor provides high level details for requested media processing. The processing descriptor may be limited to a list of sequential tasks to be performed on input media data.

**[Table 13]**

| **Parameter Name** | **Description** | **Data Type** |
|---|---|---|
| Keywords | List of keywords that can be used to execute a search in function repository. Functions are described using a human-readable description and included in the Function Repository. Either the workflow manager or the NBMP source can use function names as mentioned in Function Repository for inclusion in this field. | Array |
| URL | Pointer to the resource implementation | String |
| Start Time | Start time when the resource need to run | String |
| TaskConnecti onMap | Provides connection information between tasks in case of static workflows | Map |

Table 14 represents an example requirements descriptor. The requirements descriptor provides requirements that may be configured for basic resources.

**[Table 14]**

| **Parameter Name** | **Description** | | **Data Type** |
|---|---|---|---|
| QoS Requirements | Provides QoS requirements for the resource. These include the following: | | Object |
| | - Delay Requirement: Provides delay requirements for the resource. For task: specifies the delay requirements for the taskFor workflow: specifies the end-to-end delay requirements for the workflow | | |
| | - Bitrate Requirement: Provides bitrate requirements for content ingestion and distribution | | |
| | | •Ingestion Bitrate Requirements: Provides bitrate requirements for content ingestion | |
| | | •Distribution Bitrate Requirements: Provides bitrate requirements for content distribution | |
| | - Throughput Requirements: Provides throughput requirements for the resource | | |
| Processing Requirements | Provides processing requirements for the resource. These include the following: | | Object |
| | - Hardware Requirements: Provides hardware requirements for infrastructure to be used. These include: | | |
| | | •Processor Requirements: Minimum processor capabilities for the resource. | |
| | Note: | | |
| | | •CPU cores: Minimum number of CPU cores to be allocated | |
| | | •GPUs: Minimum number of GPUs to be allocated | |
| | Note: | | |
| | | •GPU Acceleration: Required GPU acceleration | |
| | - Storage Requirements: Provides storage requirements for compute infrastructure allocated for the resource. Information in this descriptor includes: | | |
| | •Local storage descriptor: Minimum local storage to be allocated to the resource | | |
| | •Aggregated storage: Provides information about aggregated storage (including storage from local, network, and remote) allocated the resource | | |
| | - Deployment Requirements: Provides details about deployment requirements for processing resources allocated for the workflow. Such information includes: | | |
| | •Location: Indicates the location where the processing and storage resources need to be allocated | | |
| Security Requirements | Provides detailed security requirements during content ingestion and content distribution. Such information includes: | | Object |
| | - Enable Transport Layer Security: Indicates whether to enable transport layer security | | |
| | - Enable Secure Tunneling: Indicates whether to enable secure tunneling using technologies, such as IPSec, SSH etc. | | |

Table 15 represents an example configuration descriptor. The configuration descriptor provides configuration information about basic resources.

**[Table 15]**

| **Parameter Name** | **Description** | **Data Type** |
|---|---|---|
| Parameters | Configuration details of parameters required for resource. | Array |

Table 16 represents an example delay descriptor. The delay descriptor provides delay information before starting for basic resources.

**[Table 16]**

| **Parameter Name** | **Description** | **Data Type** |
|---|---|---|
| Delay | Amount of delay before task startup | Number |

Table 17 represents an example client assistance descriptor. The client assistance descriptor provides client assistance information about basic resources.

**[Table 17]**

| **Parameter Name** | **Description** | **Data Type** |
|---|---|---|
| clientAssistanceFlag | Indicates whether the resource requires/supports client monitoring | Boolean |
| Device Capabilities | Provides information from client about device capabilities | String |
| User Preferences | Provides information from client about user preferences | String |

Table 18 represents an example failover descriptor. The failover descriptor provides information in the case of failover of basic resources.

**[Table 18]**

| **Parameter Name** | **Description** | **Data Type** |
|---|---|---|
| Failover Mode | Indicates action upon failover of underlying resource. Following are the possible values: | String |
| | - Failover Mode: Restart Immediately - Restart the resource | |
| | - Failover Mode: Restart With Delay - Restart the resource after certain delay | |
| | - Failover Mode: Continue with last good state - Restart the resource based on available state persistence information | |
| | - Failover Mode: Execute Backup Deployment - Execute backup deployment script given by Backup Deployment URL below | |
| | - If Failover Mode is Exit: Exit the resource | |
| Failover Delay | Indicates the amount of time the failover recuperation method needs to be delayed. | Number |
| | - If Failover Mode is "RestartImmediately", possible value for this field is 0 | |
| | - If Failover Mode is "RestartWithDelay", possible value for this field is amount of time the source wants the resource to be delayed. | |
| | <Default: 10 minutes> | |
| State Persistence | Provides information when state of media processing needs to be persisted. Information in this parameter includes the following: | Object |
| | - Persistence URL: URL of storage where the state information is persisted. This information is optional from the media source. The workflow manager can allocate some storage and use it for state information persistence. | |
| | - Persistence Interval: How often the state information is written to the Persistence URL. | |
| Backup Deployment URL | URL to an external/internal instruction file for backup deployment that needs to be executed upon failover. | String |

Table 19 represents an example monitoring descriptor. The monitoring descriptor provides monitoring information about basic resources.

**[Table 19]**

| **Parameter Name** | **Description** | **Data Type** |
|---|---|---|
| Event | Provides information for monitoring of certain type of events (e.g., CRITICAL, INFORMATIONAL, DEBUG) | Array |
| Variable | Provides information for monitoring of certain type of computation parameters | Array |
| System | Monitoring of system data during lifecycle of this resource | Array |

Table 19 represents an example monitoring descriptor. The monitoring descriptor provides monitoring information about basic resources.

**[Table 20]**

| **Parameter Name** | **Description** | **Data Type** |
|---|---|---|
| Assertions | Dictionary of Name Value Predicate pairs (NVPs). Each NVP pair consists of: | Object |
| | - Name: string that represents the parameter to be checked | |
| | - Value Predicate: Object representing the assertion predicate to evaluate the parameter. The value object represents all the following information | |
| | •Evaluation Condition: The condition against which the parameter will be checked with the given value | |
| | •Check Value: The value to be used while evaluating the condition | |
| | •Offset: Offset limit that the parameter can deviate from given value for the evaluation condition to evaluate to a success | |
| | •Action: Action to perform if the evaluation has failed | |

Table 21 represents an example reporting descriptor. The reporting descriptor provides reporting information about basic resources.

**[Table 21]**

| **Parameter Name** | **Description** | **Data Type** |
|---|---|---|
| Report Type | Type of report | String |
| Reporting Interval | Indicates how often the reports needs to be generated and reported | Number |
| Report Start Time | Start time for reporting | String |
| URL | URL of an external repository where the reports need to be reported/deposited | String |
| Delivery Methods | Type of delivery methods that are supported for reporting | String |

Table 22 represents an example notification descriptor. The notification descriptor provides notification information about basic resources.

**[Table 22]**

| **Parameter Name** | **Description** | **Data Type** |
|---|---|---|
| Notification | Type of notification this resource can produce/send. Possible notifications include: | Array |
| | - Congestion: Indicates capability to send congestion notification information | |
| | - Application: Indicates capability to send application specific notification information | |
| | - System: Indicates capability to send system specific notification information | |
| URL | URL where the resource intends to receive notifications | String |
| Notification Interval | Interval at which notifications needs to be delivered. Possible values are : | Number |
| | •0: Notification interval of zero indicates that the notification should be sent as soon as the corresponding event is observed | |
| | •Value greater than 0: | |
| | Any value greater than 0 indicates the interval after which the notification is delivered | |

Table 23 represents an example group descriptor. Function may indicate whether it may be executed in any combination with other function or whether it is required to be instanced as part of a function group. For example, a flag may be used to indicate it. A new group descriptor may be used to indicate a list of function groups where the function may be used. For each defined group, the group descriptor may include the corresponding input, configuration, and output restriction.

**[Table 23]**

| **Parameter Name** | **Description** | **Data Type** |
|---|---|---|
| GroupId | Unique Identifier of the Function Group in the current Function Repository. | integer |
| InputRestrictions | A subset of the input parameters with their allowed values when the Function is used in this Group. | Parameters |
| ConfigurationRestrictions | A subset of the configuration parameters with their allowed values when the Function is used in this Group. | Parameters |
| OutputRestrictions | A subset of the output parameters with their allowed values when the Function is used in this Group. | Parameters |

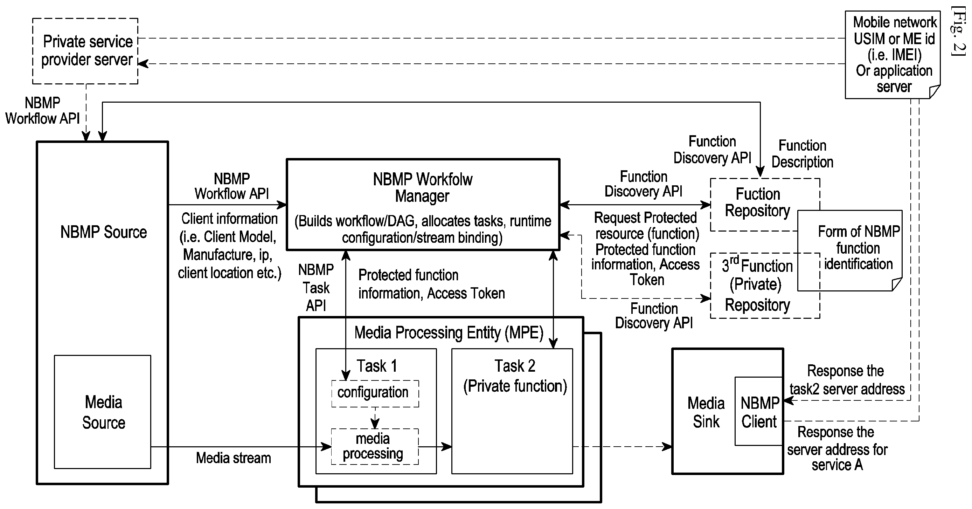

FIG. 2 illustrates an NBMP system for performing NBMP authentication according to an embodiment of the disclosure.

Referring to FIG. 2, the NBMP system of FIG. 2 may include the components of the NBMP system of FIG. 1. According to an embodiment of the disclosure, the NBMP system of FIG. 2 may further include additional components for authentication or may exclude some components of the NBMP system of FIG. 1.

Referring to FIG. 2, an NBMP system may include an NBMP source, an NBMP workflow manager, a function repository, a media processing entity(ies) and/or a media sink(s). The NBMP system may communicate with an external entity (device), e.g., a private service provider server, 3rd function (private) repository and/or application server.

Referring to FIG. 2, the NBMP system may perform the following four operations for NBMP authentication.
1. An operation in which a service user delivers information of the service user (e.g., an identifier, such as IMEI) to use private service of the NBMP to the service provider (service provider server), and the service provider server delivers it to the NBMP service provider (i.e., NBMP Source).
2. An operation in which the NBMP source initiates the service and transmits information about the service to the NBMP workflow manager.
3. An operation in which the NBMP workflow manager generates a private service workflow and initiates the service.
4. An operation in which if specific/private service users connect/request the service, the service provider server (MNO (mobile network operator)) responds with a server address for providing and including private contents or service.

Embodiment for accessing the protected resource during NBMP services

Hereinafter, an embodiment for the NBMP system to access a protected resource (function) is described with reference to FIG. 2.

Referring to FIG. 2, upon requesting a service, the service user may send a request for a specific service. At this time, the service user may include the service user information about the service in the request and transfer the request to the NBMP source. In the disclosure, service user information may be referred to as user information or client information, and may include at least one of, e.g., client model, manufacturer, IP address, or client position information.

The NBMP source may transfer service information or function information for the service to the NBMP workflow manager via the workflow description. At this time, the service user information may be transferred using the authentication descriptor or configuration descriptor. According to an embodiment of the disclosure, the service user information transferred using the authentication descriptor or configuration descriptor may include the whole or part of the service user information transferred from the service user. For example, the service user information transferred using the authentication descriptor or configuration descriptor may include at least one of client model, manufacturer, IP address, or client position information. In the disclosure, the authentication descriptor may be referred to as a security descriptor.

The workflow manager may select a function appropriate for the service based on the service provider's (user's) NBMP service request information (e.g., service information, information about functions (function information), and/or service user information) transferred via the workflow description and may send a request the function information to the function repository.

Further, the workflow manager may determine whether the user is adequate for using the service based on the service user information transferred via the service provider and generate a workflow for providing service.

Upon generating the workflow for service, the workflow manager may transfer pieces of information (task-related information) for the function to the task of each MPE using the task description. At this time, the workflow manager may include authentication/authorization information (e.g., access token) indicating that the service or function may be used in the authentication descriptor and transfer the authentication descriptor.

The task may execute the function and start the service based on the task-related information and/or authentication/authorization information transferred via the task description.

Described below are an embodiment when the NBMP source or NBMP workflow manager is authenticated/authorized, an embodiment when the NBMP source sends service information or function information about a specific function, an embodiment in which all the main functions are included, an embodiment of client-focused authentication, source-focused authentication, or authentication of both the client and source, and an embodiment of sending a request for information to the 3rd party when the function is not included in the operator/communication NBMP function.

### <Embodiment (1): How to use the authorization descriptor on NBMP (1)>

Hereinafter, a first embodiment of a method of using an authorization descriptor for authentication/authorization in the NBMP is described. The description of the first embodiment is based on the workflow description and exemplifies a flow of information from the NBMP source to the NBMP workflow manager.

To start an NBMP service, the NBMP source may request to generate a workflow via the workflow description at the request of the media source or service operator.

The NBMP source may make a definition as to the function to be used in the service via the processing descriptor in the workflow description and may request function information about the basic service. In the case of using a service using the function that provides protected access or service, the NBMP source may transfer the function information and information related to authentication/authorization of the function via the authentication descriptor. Further, for authentication/authorization of the function, the NBMP source may define user information for authentication/authorization and its related functions in the authorization descriptor and transfer the same.

The workflow manager may generate a workflow based on the information transferred via the workflow descriptor. At this time, the workflow manager may determine to use the protected or unprotected functions. Use of the protected function or service function requires authorization of use of the function. Authorization for using service varies depending on the entity offering the service. For example, the service function or QoS-related part may be applied via the network manager or server, and the part related to use of function may be determined (applied) via the workflow manager itself or server owning/providing function.

Meanwhile, the information transferred from the NBMP source or 3rd party service user may be applied for authorization. For example, content (information) transferred via the network manager or service-related service user, such as client assistant descriptor, may be used for authorization.

If the NBMP source performs authentication on service or function, the source (NBMP source) may transfer information authorized for use of the service or function to the NBMP workflow manager via the information in the authorization_parameter/configuration in the authentication descriptor. For example, in the case of Oauth or JWT, the NBMP source may transfer authorized information (authorization information) in the form of a token to the NBMP workflow manager, generating a workflow.

If the NBMP workflow manager instead performs authorization on a protected service or function, i.e., if the NBMP workflow manager, not the NBMP source, performs authentication/authorization on a service or function, the NBMP source may transfer information about the service or user to be authorized to the NBMP workflow manager via the authorization_parameter/configuration. For example, if an authorization method, such as Oauth, is used, the user (or NBMP source) may transfer user equipment information using a client secret field for authorization of the service.

### <Embodiment (2): How to use the authorization descriptor on NBMP (2)>

Hereinafter, a second embodiment of a method of using an authorization descriptor for authentication/authorization in the NBMP is described. The description of the second embodiment is based on the workflow description and exemplifies a flow of information from the NBMP workflow manager to the function repository.

The NBMP workflow manager may generate a workflow based on information in the workflow description transferred from the NBMP source.

If the NBMP source transfers the workflow description in the state authenticated/authorized for protected service, the NBMP source may recognize which one of the functions to generate the workflow for service needs to be authorized, and the NBMP system may include the protected function information and authorization information for accessing the function using the authorization descriptor and transfer the same to the workflow manager.

If the NBMP workflow manager performs a task for authorization for service, the NBMP source may transfer authentication/authorization-related information to the workflow manager according to the following two cases.
1) If the NBMP source is aware which function needs to be authorized, the NBMP source includes the function information in the authorization descriptor and transfers the same, and the NBMP source may include information indicating that authorization of the function is needed using the authorization field in the processing descriptor and transfer the same.
2) If the NBMP source is unaware which function needs to be needed, the workflow manager may make determination based on information about the media resource or NBMP sink transferred via the authorization descriptor or requirement descriptor, and/or measurement descriptor. For example, the workflow manager may have a priority per function to guarantee QoS and determine a specific condition (e.g., allocation of protected resource on the media resource or NBMP sink) based on the per-function priority.

To allocate the protected function to the task, the workflow manager may transfer authorization information about each protected function to the task, and the task directly sends a request to the function repository and receives the protected function, or the workflow manager may directly send a request to the function repository and allocate the protected function to the task. If the primary function repository lacks the function, the workflow manager may send a request for authorization information and function to the 3rd party function repository (secondary function repository) and receive the authorization and function and may allocate the protected function to the task.

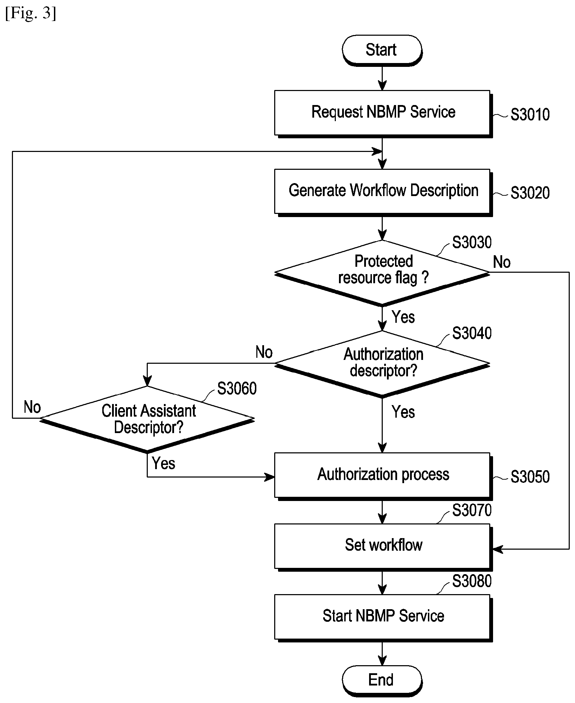

FIG. 3 illustrates a method for using protected services/resources in an NBMP system according to an embodiment of the disclosure.

Referring to FIG. 3, for authorization or authentication, protected resource flag and/or authorization flag may be used. Here, protected resource flag denotes a flag for a service that informs service requiring authentication/authorization. For example, protected resource flag may be a flag indicating whether the service is a service requiring authorization. Authorization flag denotes a flag e.g., in the processing descriptor that informs that the corresponding function(s) need authorization. For example, authorization flag may be a flag indicating whether the resource requires or supports authorization for accessing. Further, the embodiment of FIG. 3 includes protected resource, e.g., an authorization or authentication process for starting a specific function or service.

The overall authorization process performed by the workflow manager is as follows.

A process in which 3rd service operator or NBMP source determines or starts protected service or function. This process may include an operation S3010 in which the 3rd service operator or NBMP source request an NBMP service.

A process in which if the whole service or a specific function in the service requires authorization or authentication upon generating workflow, the NBMP source includes the information in the workflow descriptor and transmits the same to the workflow manager (e.g., protected resource flag or authorization flag). This process may include an operation S3020 in which the NBMP source generates a workflow description including the protected resource flag and/or authorization flag.

A process in the workflow manager requests authorization on the service or function based on information in the received workflow description. This process may include an operation S3030 in which the workflow manager identifies whether the protected resource flag is included in the workflow description and interprets the value of the protected resource flag.

A process in which the workflow manager performs an operation S3050 of authorizing the protected service or function based on information about the media source and/or media sink (client) obtained via the authorization descriptor. This process may include an operation S3040 in which the workflow manager identifies whether the authorization descriptor is included in the workflow description and obtains information included in the authorization descriptor.

A process in which the workflow manager performs the authorization an operation S3050 using the information in the measurement function or client assistant descriptor if the information is not in the authorization descriptor. This process may include an operation S3060 in which the workflow manager identifies the client assistant descriptor or measurement function and obtains the information in the measurement function or client assistant descriptor.

A process in which if all the descriptors or information cannot be received, the workflow manager notifies the NBMP source that the service or function cannot be used, reperforming the second process and its subsequent processes.

A process in which after the authorization process, the workflow manager allocates functions based on the information and transfers the authorization information (e.g., token) to, e.g., the task via the task description, and the function repository loads the function up on the task. This process may include an operation S3070 in which the workflow manager configures a workflow.

### Service start at operation S3080

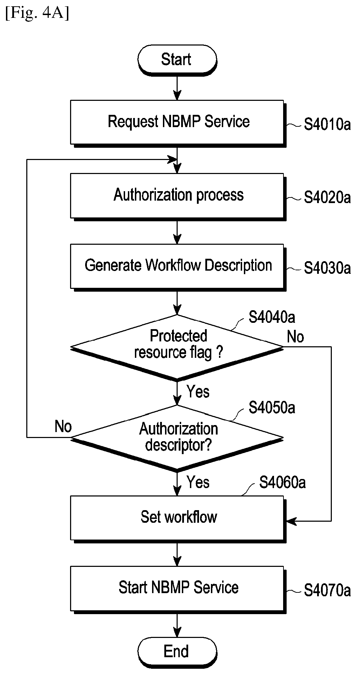

FIG. 4A illustrates a method for using protected services/resources in an NBMP system according to an embodiment of the disclosure.

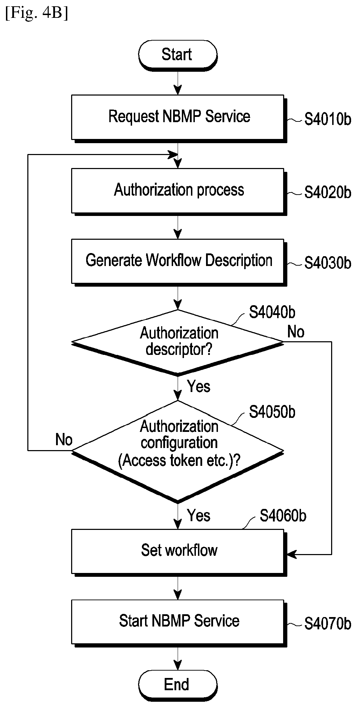

Referring to FIG. 4A, for authorization or authentication, protected resource flag and/or authorization flag may be used. For example, for authorization or authentication, the protected resource flag may be used in the embodiment of FIG. 4A, and the authorization flag may be used in the embodiment of FIG. 4B.

Here, protected resource flag denotes a flag for a service that informs service requiring authentication/authorization. For example, protected resource flag may be a flag indicating whether the service is a service requiring authorization. Authorization flag denotes a flag e.g., in the processing descriptor that informs that the corresponding function(s) need authorization. For example, authorization flag may be a flag indicating whether the resource requires or supports authorization for accessing. Further, the embodiment of FIG. 4A includes protected resources, e.g., an authorization or authentication process for starting a specific function or service.

The overall authorization process performed by the NBMP source is as follows.

A process in which 3rd service operator or NBMP source determines or starts protected service or function. This process may include an operation S4010a in which the 3rd service operator or NBMP source request an NBMP service.

An operation S4020a in which the NBMP source performs authorization on the service or function based on the information about the 3rd service operator or media source

A process in which upon generating workflow, the NBMP source includes information (e.g., Protected_resource_flag) indicating that authorization or authentication is needed for the whole service or a specific function in the service in the workflow description and transmits the same to the workflow manager. This process may include an operation S4030a in which the NBMP source generates a workflow description including the protected resource flag.

A process in which if there is no information (authorization information) necessary for accessing or using the service or function transmitted via the authorization descriptor, the workflow manager indicates failure in generating the workflow for the service. This process may include an operation S4040a in which the workflow manager identifies whether the protected resource flag is included in the workflow description and interprets the value of the protected resource flag and an operation S4050a in which the workflow manager identifies whether the authorization descriptor is included in the workflow description and obtains the information included in the authorization descriptor. For example, if the Protected_resource_flag is not included in the workflow description or if the Protected_resource_flag is included in the workflow description but is not in the authorization descriptor, the workflow manager may notify the NBMP source of failure to generate a workflow for service.

A process S4060a in which the workflow manager generates a workflow using the protected service or function using the pre-authorized authorization information in the Authorization_parameter/Configuration in the authorization descriptor. For example, if the Protected_resource_flag and the authorization descriptor are included in the workflow description, the workflow manager may generate a workflow using the protected service or function using the pre-authorized authorization information in the Authorization_parameter/Configuration in the authorization descriptor.

A process in which after the authorization process, the workflow manager allocates functions to task(s) based on the information and transfers the authorization information (e.g., token) to, e.g., the task or the function repository directly loads the function up on the task. The configuration of workflow may be completed by the processes.

### Service start at operation S4070a

FIG. 4B illustrates a method for using protected services/resources in an NBMP system according to an embodiment of the disclosure.

Referring to FIG. 4B, the overall authorization process performed by the NBMP source is as follows.

A process in which 3rd service operator or NBMP source determines or starts protected service or function. This process may include an operation S4010b in which the 3rd service operator or NBMP source requests an NBMP service.

An operation S4020b in which the NBMP source performs authorization on the service or function based on the information about the 3rd service operator or media source

A process in which upon generating workflow, the NBMP source includes information (e.g., authorization parameter) indicating that authorization or authentication is needed for the whole service or a specific function in the service and the authorization information (e.g., access token) in the workflow description and transmits the same to the workflow manager. This process may include an operation S4030b in which the NBMP source generates a workflow description including the authorization configuration (e.g., access token) and authorization descriptor.

A process in which if there is no information (authorization information) necessary for accessing or using the service or function transmitted via the authorization descriptor, the workflow manager indicates failure in generating the workflow for the service. This process may include an operation S4040b in which the workflow manager identifies whether the authorization descriptor is included in the workflow description and an operation S4050b for identifying whether the authorization configuration is included in the authorization descriptor. For example, if the authorization descriptor is not included in the workflow description or if the authorization descriptor is included in the workflow description but the authorization configuration (e.g., access token) is not in the workflow description or authorization descriptor, the workflow manager may notify the NBMP source of failure to generate a workflow for the service.

An operation S4060b in which the workflow manager generates a workflow using the protected service or function using the pre-authorized authorization information in the authorization parameter/configuration in the authorization descriptor. According to the claimed embodiment, the authorization descriptor and authorization configuration are included in the workflow description, the workflow manager generates a workflow using the protected service or function using the pre-authorized authorization information in the Authorization_parameter/Configuration in the authorization descriptor.

A process in which after the authorization process, the workflow manager allocates functions to task(s) based on the information and transfers the authorization information (e.g., token) to, e.g., the task or the function repository directly loads the function up on the task. The configuration of workflow may be completed by the processes.

### Service start at operation S4070b

Hereinafter, an embodiment of NBMP authorization descriptor is described. According to an embodiment of the disclosure, the NBMP authorization descriptor may include at least one parameter to meet protected resource/service requirements.

For example, the NBMP authorization descriptor may include at least one of the enable NBMP authorization parameter, NBMP authorization type parameter, protected resource parameter, and authorization parameter/configuration parameter. In the disclosure, the NBMP authorization descriptor may be simply referred to as an authorization descriptor.

The enable NBMP authorization parameter may be a parameter related to the enablement of authentication and may correspond to the above-described authorization flag parameter.

The NBMP authorization type parameter indicates the type of authentication protocol. For example, the NBMP authorization type parameter may provide one of OAuth 1.0, OAuth 2.0, SAML 1.0, or SAML 2.0 based on the existing authentication protocol, as the type of authentication protocol.

The protected resource parameter may provide information for protected resource (e.g., NBMP service or function). The NBMP service may include, e.g., VR (live) streaming, point cloud streaming, transcoding or target service, i.e., Al upscaler for Samsung TV or mobile. The NBMP function is provided by the service operator or 3rd party function service provider and may include, e.g., mpeg-nbmp-transcoder, mepg-nbmp-encoder, mpeg-nbmp-decoder, mpeg-nbmp-pre-renderer, mpeg-nbmp-remote-renderer, mpeg-nbmp-streamer, mepg-nbmp-packager, mpeg-nbmp-drm, mpeg-nbmp-omafcreator, mepg-nbmp-vrstitcher, mepg-nbmp-panoramicstitcher, mpeg-nbmp-calibrator, mpeg-nbmp-composition, mepg-nbmp-stream-switcher, or mpeg-nbmp-measurement. The authorization parameter/configuration parameter is for authentication-related parameter and/or configuration and may include, e.g., access token, and/or client or media source information. Here, the access token may be, e.g., ID token. Further, the client or media source information may include information about Client_Secret (Oauth), IMEI&IMSI (LTE or 5G), client manufacture info, service provider info, and/or network provider info.

Hereinafter, each parameter of the authorization descriptor is described for example.

For example, the authorization flag parameter value being 1 may indicate that the authorization flag parameter needs an authentication procedure. The authorization flag parameter value being 0 may indicate that the authorization flag parameter needs no authentication procedure.

The NBMP authorization type parameter may indicate a processing method using an authentication process standard, e.g., Oauth.

The protected resource parameter may indicate a protected service or a specific protected function or resource. For example, the protected resource parameter may indicate an NBMP function. The authorization parameter/configuration parameter includes information for carriage or authentication of an authenticated token. The access token may be the carriage of an authenticated token. 1) The NBMP source may perform an authentication procedure and send the access token to the workflow manager or 2) the workflow manager may perform an authentication procedure and send the access token to the task or function repository. The client or media source information may be information for authentication and may be, e.g., media source or NBMP sink information and may be transferred from the NBMP source to the NBMP workflow manager.

### Example of specified service (1)

In an embodiment of the disclosure, it is assumed that a user using a terminal or media device of a specific manufacturer (e.g., manufacturer A) takes advantage of an NBMP service. To provide a manufacturer-specified service, a specific manufacturer may provide the service to a user of a specific model. If the UE is using a communication network, the service operator or NBMP source may receive corresponding information and, upon generating a workflow for NBMP service, use the information. For example, the NBMP source may receive the UE's international mobile equipment identity (IMEI) or international mobile subscriber identity (IMSI) information via an LTE home subscriber server (HSS) or 5G application function (AF) server and may undergo an authorization process using the information or may transfer the information to the workflow manager to perform an authorization process. After having undergone the authorization process on the protected service or function through the process, the terminal may use the service or function provided by the manufacturer. The following usage is possible based on the terminal or device information for providing the protected service as above.

In other words, authentication may be performed on the media service device and/or terminal using the information (thus, a service for a specific terminal may be provided based on the media service device that may use the protected service)

For example, use of function A provided by media service device manufacturer A (function A may be used only by devices from the media service device manufacturer) → media service device authentication

If there are function B (LTE) and function C (5G) for using the service provided by terminal manufacturer B, authentication on use of the function of a specific model from a specific terminal manufacturer based on the device information → terminal authentication

Functions A, B (LTE), and C (5G) of media service device manufacturer A are used and, upon use of the terminal of terminal manufacturer D for its associated or specified service, authentication on use of the protected service/function → service device (media service device) and terminal authentication

### Example of specified service (2)

In an embodiment of the disclosure, the NBMP (e.g., NBMP source or workflow manager), upon using a service, may determine, e.g., the QoS and the user's subscription information in the same service and may be authorized for information about paid or protected service (function) based on information about the user. If the user is one of high subscription, the NBMP may send a request for authorization on each function based on user information about the authorized user using the priority information about the function. For example, if the user is of a UHD-tier rate plan, the NBMP reports that the priority of function is 0 (the priority reduces as the number goes up from 0), requests to authorize the protected function, allowing for the service to be used. In the case of using functions in the same service, the NBMP may select a function depending on the user's rate plan or view/subscription service. At this time, if the user is a premium service user, a service with function A of high quality/low latency may be provided based on the user's information and, if the user is a basic or free service subscriber, a service of minimum QoS may be provided using the basic function or function C.

When the user subscribing to the mobile network operator (MNO) uses the media service provided from the MNO (MNO A), a high QoS-guaranteed function and connection may be provided, and the workflow manager or NBMP source may perform authentication on the use of the function and connection and, upon generating a workflow, the service may be connected based on the service user's information. If another MNO or 3rd party user uses the media service provided from MBO A, connection may be made to the function and service providing the basic QoS.

To use differentiated services of the UE or manufacturer per service/per rate plan, the NBMP may be authorized/authenticated via the function provider or service operator in the workflow manager or NBMP source as to whether the user is appropriate for using the service, allowing the service to be used.

Table 24 below represents example function priority for user rate plans.

**[Table 24]**

| **User rate plan** | **Function Priority** |
|---|---|
| SD | 3 |
| HD | 2 |
| FHD | 1 |
| UHD | 0 |

Table 25 represents example priority for function A.

**[Table 25]**

| **Function A** | **Function provider** |
|---|---|
| Priority 0 | A |
| Priority 1 | A' |
| Priority 2 | B |
| Priority 3 | c |

### <Example of workflow manager operation>

An example operation of the workflow manager is described below.

If access token and function information are in the message (descriptor) when the workflow manager receives the authorization descriptor, the workflow manager checks whether the function repository allocates the functions to the workflow.

For example, if the corresponding function is in the function repository, the workflow manager may directly allocate the function. In contrast, unless the corresponding function is in the function repository (e.g., the function repository of the service operator providing the service), the workflow manager fetches it using the access token in the function description.

At this time, the function repository may be defined as a primary function repository, and the function repository providing a specific protected function and 3rd party may be defined as a second function repository. If the primary function repository lacks the information, a request for the information may be sent to the second function repository designated in the function repository. At this time, access to the secondary function repository may be performed by carrying the access token information over, e.g., HTTP redirection. The workflow manager may receive information, such as an algorithm for function, from the primary function repository and secondary function repository and allocate the same to the task, thereby completing the workflow for the service.

The workflow manager may directly or indirectly (e.g., using the URL) transfer the information about the function to the task. For example, upon directly transferring the function information from the workflow manager to the task, the workflow manager may transfer, e.g., algorithm information via, e.g., the task description. Upon indirect transfer to the task, the workflow manager may also transfer the access token and indirect information (e.g., URL) for the function repository to receive the function, and upon directly sending a request for information at the URL, carry the token information together, allowing the task to directly receive the algorithm for the function.

### < NBMP authorization service flow>

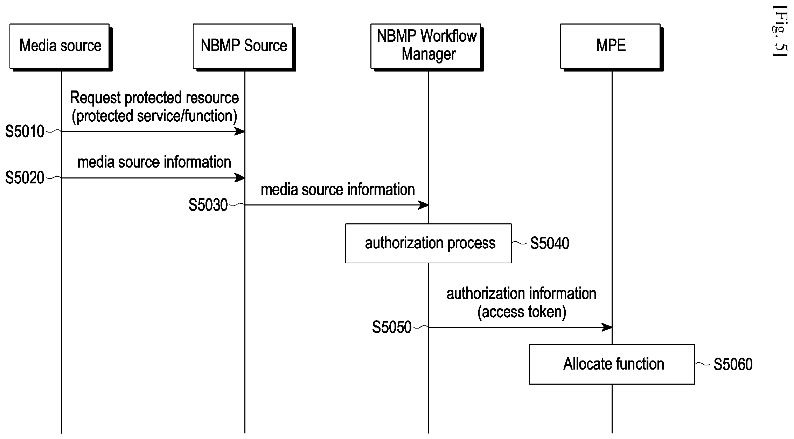

FIG. 5 illustrates a procedure of performing authentication on an NBMP service by an NBMP system according to an embodiment of the disclosure.

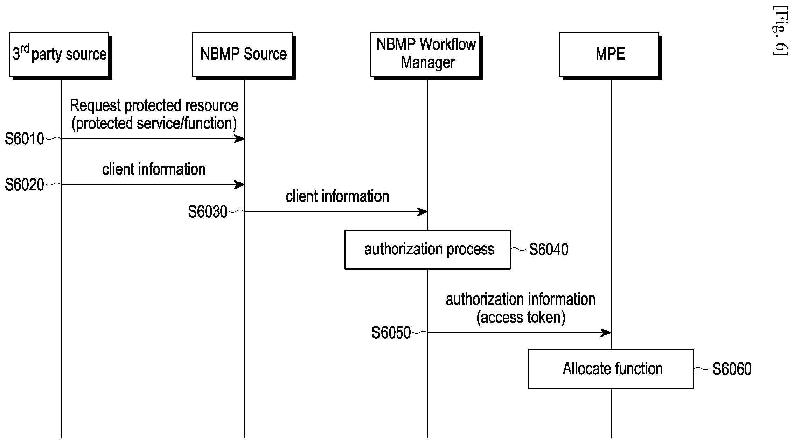

FIG. 6 illustrates a procedure of performing authentication on an NBMP service by an NBMP system according to an embodiment of the disclosure.

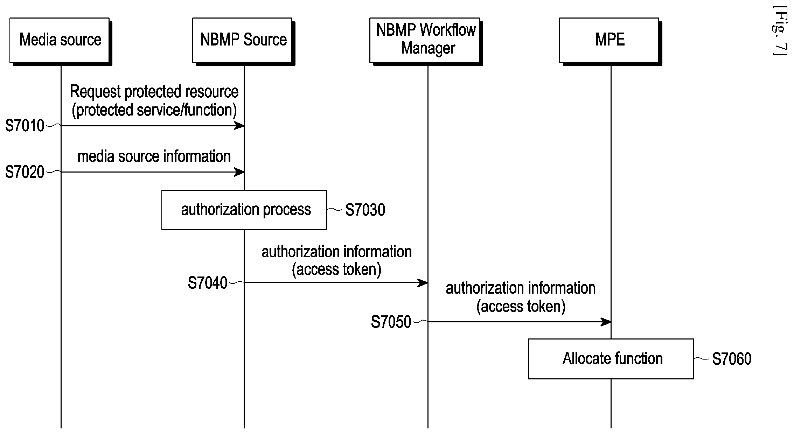

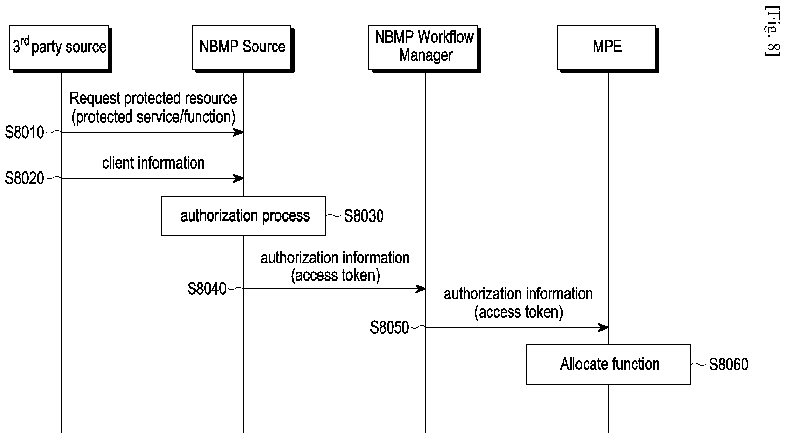

FIG. 7 illustrates a procedure of performing authentication on an NBMP service by an NBMP system according to an embodiment of the disclosure. FIG. 8 illustrates a procedure of performing authentication on an NBMP service by an NBMP system according to an embodiment of the disclosure.

Various embodiments of NBMP authorization service flow are described below with reference to FIGS. 5 to 8. Regarding an NBMP authorization service, there may be a scenario case where the NBMP source (media source) starts the service, and a scenario case where the 3rd party server starts the service (e.g., 3rd party server → NBMP source → NBMP workflow manager).

### First embodiment of the disclosure, embodiment of FIGS. 5 and 6

In the first embodiment of the disclosure, it is assumed that the NBMP workflow manager processes tokens and communicates with an authenticated server, and the access token is transmitted to the MPE to start a service or function.

First-first embodiment (the embodiment of FIG. 5): authenticated service/function usage service 1 (an authentication procedure performed by the NBMP workflow manager. The media source requests the protected function/resource)

The media source requests a specific service requiring authentication (protected function/resource) in operation S5010.

The media source sends the information (e.g., information about the media source) to the NBMP source to identify a grant for protected function/resource authentication in operation S5020. In an embodiment of the disclosure, the media source information may be transmitted, included in the request of in operation S5010.

The NBMP source transmits media resource information to the NBMP workflow manager in operation S5030.

The NBMP workflow manager may identify the authentication grant and receive authentication information (e.g., the access token) (an authentication procedure performed by the NBMP workflow manager) in operation S5040.

The NBMP workflow manager transmits the authentication information (e.g., the access token) to start/initiate a service in operation S5050.

As the function is allocated to the task of the MPE, the generation of workflow is complete in operation S5060.

The above-described has the following flow of information: media source→(client information)→NBMP source→(Authorization descriptor+media source info)→NBMP workflow manager→(Access token)→MPE(NBMP media function)→start
The above-described embodiment is intended to provide a specific service/function to the target media source or service provider (e.g., Samsung gear 360 may use the Samsung stitching function of the NBMP).

According to an embodiment of the disclosure, some of the operations in the embodiment of FIG. 5 may be omitted, may be performed in a different order than that shown in FIG. 5, and two operations may be merged and performed. For example, operations S5010 and S5020 may be merged into a single request message transmission operation and may be used to transmit a request for protected resource and media source information.

First-second embodiment (the embodiment of FIG. 6): authenticated service/function usage service 2 (an authentication procedure performed by the NBMP workflow manager. The 3rd party requests the protected function/resource.)

The 3rd party requests a specific service requiring authentication (protected function/resource) in operation S6010.

The 3rd party sends the information (e.g., client info) to the NBMP source to identify a grant for protected function/resource authentication in operation S6020. In an embodiment of the disclosure, the client info may also be transmitted, included in the request of in operation S6010.

The NBMP source transmits 3rd party server information to the NBMP workflow manager in operation S6030.

The NBMP workflow manager may identify the authentication grant and receive authentication information (e.g., the access token) (an authentication procedure performed by the NBMP workflow manager) in operation S6040.

The NBMP workflow manager transmits the authentication information (e.g., the access token) to start/initiate a service in operation S6050.

As the function is allocated to the task of the MPE, the generation of workflow is complete in operation S6060.

The above-described has the following flow of information: 3rd party source→(client information)→NBMP source→(Authorization descriptor+media source/client info)→NBMP workflow manager→(Access token)→MPE(NBMP media function)→start
In the above-described embodiment of the disclosure, the 3rd party service provider may use a protected function/resource pre-contracted with the function provider to provide a better service to a specific user (e.g., a high-price service subscriber).

According to an embodiment of the disclosure, some of the operations in the embodiment of FIG. 6 may be omitted, may be performed in a different order than that shown in FIG. 6, and two operations may be merged and performed. For example, operations S6010 and S6020 may be merged into a single request message transmission operation and may be used to transmit a request for protected resource and client information.

### Second embodiment of the disclosure, embodiment of FIGS. 7 and 8

In the second embodiment of the disclosure, it is assumed that the NBMP source or 3rd party server processes tokens and communicates with an authenticated server, and the access token is transmitted from the NBMP source to the workflow manager to start a service or function.

Second-first embodiment (the embodiment of FIG. 7): authenticated service/function usage service 3 (an authentication procedure performed by the NBMP source. The media source requests the protected function/resource.)

The media source requests a specific service requiring authentication (protected function/resource) in operation S7010.

The media source sends the information (e.g., information about the media source) to the NBMP source to identify a grant for protected function/resource authentication in operation S7020. In an embodiment of the disclosure, the media source information may be transmitted, included in the request in operation S7010.

The NBMP source communicates with the authentication server to receive authentication information (e.g., access token) in operation S7030 and transmits the authentication information (e.g., access token) to the NBMP workflow manager in operation S7040 (an authentication procedure performed by the NBMP source).

The NBMP workflow manager transmits the authentication information (e.g., the access token) to the MPE to start a service in operation S7050.

As the function is allocated to the task of the MPE, the generation of workflow is complete in operation S7060.

The above-described has the following flow of information: media source→(client information)→NBMP source→(Authorization descriptor+access token)→NBMP workflow manager→(Access token)→MPE(NBMP media function)→start
According to an embodiment of the disclosure, some of the operations in the embodiment of FIG. 7 may be omitted, may be performed in a different order than that shown in FIG. 7, and two operations may be merged and performed. For example, operations S7010 and S7020 may be merged into a single request message transmission operation and may be used to transmit a request for protected resource and media source information.

Second-second embodiment (the embodiment of FIG. 8): authenticated service/function usage service 4 (an authentication procedure performed by the NBMP source. The 3rd party requests the protected function/resource.)

The 3rd party requests a specific service requiring authentication (protected function/resource) in operation S8010.

The 3rd party sends the information (e.g., client info) to the NBMP source to identify a grant for protected function/resource authentication in operation S8020. In an embodiment of the disclosure, the client info may also be transmitted, included in the request of S8010.

The NBMP source communicates with the authentication server to receive authentication information (e.g., an access token) in operation S8030 and transmits the authentication information (e.g., an access token) to the NBMP workflow manager in operation S8040 (an authentication procedure performed by the NBMP source).

The NBMP workflow manager transmits the authentication information (e.g., the access token) to the MPE to start a service in operation S8050.

As the function is allocated to the task of the MPE, the generation of workflow is complete in operation S8060.

The above-described has the following flow of information: 3rd party source→(client information)→NBMP source→(Authorization descriptor+Access token)→NBMP workflow manager→(Access token)→MPE(NBMP media function)→start
According to an embodiment of the disclosure, some of the operations in the embodiment of FIG. 8 may be omitted, may be performed in a different order than that shown in FIG. 8, and two operations may be merged and performed. For example, operations S8010 and S8020 may be merged into a single request message transmission operation and may be used to transmit a request for protected resource and client information.

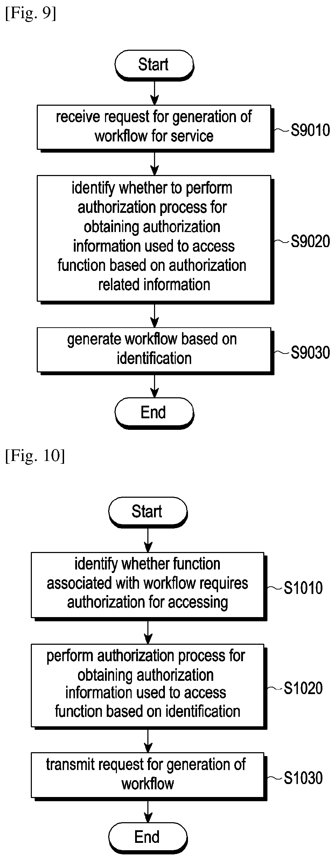

FIG. 9 illustrates a claimed method of performing authentication by a first network entity in an NBMP system according to an embodiment of the disclosure. No duplicate description is given of those described above in connection with FIGS. 1 to 8.

In the embodiment of FIG. 9, the first network entity may be the NBMP workflow manager, and the second network entity may be the NBMP source.

Referring to FIG. 9, the first network entity receives a request for generating a workflow for a service from the second network entity in operation S9010. According to a claimed embodiment of the disclosure, the request includes authorization -related information about a function associated with the workflow.

According to an embodiment of the disclosure, the authorization -related information may include first flag information indicating whether the function requires authorization for access. Here, the first flag information may be the above-described authorization flag or private function flag.

In a claimed embodiment of the disclosure, the authorization -related information is second flag information indicating whether the authorization information is present in the workflow description. According to an embodiment of the disclosure, the authorization information may be the access token.

According to an embodiment of the disclosure, the second flag information is a flag (e.g., the private function flag) indicating whether the authorization information (qualified information) for accessing the protected resource/function is included in the workflow description (or workflow description document (WDD)). In this case, if the second flag (private function flag) is set to a first value (e.g., 0), it is indicated that the protected resource/function is required for the workflow and authorization information (e.g., access token) is included in the WDD. If the second flag (private function flag) is set to a second value (e.g., 1), it is indicated that although the protected resource/function is required for the workflow, the first network entity needs to obtain authorization information (e.g., access token) for accessing the protected resource/function using other means (e.g., the source-assistance information in the client-assistance descriptor).

The authorization -related information may be included in the authorization descriptor of the workflow description.

The first network entity may identify whether to perform an authorization procedure for obtaining the authorization information used to access the function based on the authorization -related information in operation S9020.

For example, if the first flag information indicates that the function requires authorization for access, the first network entity may identify that the authorization procedure needs to be performed. If the first flag information indicates that the function does not require authorization for access, the first network entity may identify that the authorization procedure need not be performed.

As another example, if the second flag information is set to the first value (0), the first network entity may identify that the authorization procedure need not be performed. If the second flag information is set to the second value (1), the first network entity may identify that the authorization procedure needs to be performed.

The first network entity may generate the workflow based on the identification in operation S9030. According to an embodiment of the disclosure, in a case where it is identified that an authorization procedure is performed for obtaining the authorization information for accessing the function, the first network entity may obtain the function based on the authorization information and generate the workflow using the function. According to an embodiment of the disclosure, in a case where it is identified that an authorization procedure is not performed for obtaining the authorization information for accessing the function, the first network entity may obtain the function based on the authorization information received from the second network entity and generate the workflow using the function.

FIG. 10 illustrates a claimed method of performing authentication by a second network entity in an NBMP system according to an embodiment of the disclosure. No duplicate description is given of those described above in connection with FIGS. 1 to 9.

In the embodiment of FIG. 10, the first network entity is the NBMP workflow manager, and the second network entity is the NBMP source.

Referring to FIG. 10, the second network entity identifies whether the workflow-associated function requires authorization for access in operation S1010.

The second network entity performs an authorization procedure for obtaining authorization information used for accessing the function in operation S1020.

The second network entity transmits a request for generating the workflow to the first network entity in operation S1030. According to the claimed embodiment of the disclosure, the request includes authorization -related information for the function. According to the claimed embodiment of the disclosure, the authorization information is included in the workflow descriptor and be transmitted to the first network entity.

According to the claimed embodiment of the disclosure, the authorization -related information may include flag information (first flag information) indicating whether the function requires authorization for access and may be included in the authorization descriptor of the workflow description. Further, the authorization -related information includes the above-described second flag information.

In the embodiment of FIG. 10, if it is identified that the function requires authorization for access, the second network entity performs the authorization procedure. However, according to an embodiment of the disclosure, although it is identified that the function needs authorization, the second network entity may not perform authorization depending on whether it has the capability of performing an authorization procedure. In this case, the second network entity may not transmit the authorization information to the first entity but may transmit only authorization -related information about the function to the second entity.

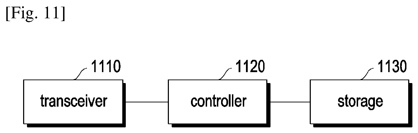

FIG. 11 illustrates a structure of a network entity according to an embodiment of the disclosure.

The network entity of FIG. 11 may be a component of the NBMP system of FIGS. 1 and 2. For example, the network entity may be one of the media source, NBMP source, NBMP workflow manager, function repository, media processing entity(ies), or media sink(s).

Referring to FIG. 11, the network entity may include a transceiver 1110, a controller 1120, and storage 1130. In the disclosure, the controller may be defined as a circuit or application-specific integrated circuit or at least one processor.

The transceiver 1110 may transmit and receive signals to/from other network entities. The transceiver 1110 may receive a request for generating a workflow from, e.g., the NBMP source. The request may include authentication-related information for the function associated with the workflow.

The controller 2520 may control the overall operation of the terminal according to an embodiment. For example, the controller 2520 may control inter-block signal flow to perform the operations according to the above-described flowchart. Specifically, the controller 2520 may control the authentication operation for accessing the protected function according to an embodiment.

The storage 2530 may store at least one of information transmitted/received via the transceiver 2510 and information generated via the controller 2520. For example, the storage 2530 may store authentication-related information for the protected function.

The disclosure has been shown and described with reference to various embodiments thereof, it will be understood by those skilled in the art that various changes in form and details may be made therein.

## Claims

1. A method of performing authentication by a network-based media processing, NBMP, workflow manager network entity in a NBMP system, the method comprising:
receiving (S9010), from a NBMP source network entity, a request for generating a workflow for a service and workflow description provided as the request, the workflow description including an authorization descriptor and a client assistance descriptor,
wherein the authorization descriptor includes information indicating whether a function associated with the workflow is a protected function,
wherein the authorization descriptor includes authentication method information indicating an authentication method used for an authentication for the protected function, and authorization -related information including a flag indicating (S9020) whether an access token for authorizing access to the protected function is included in the workflow description,
wherein the flag is set to one of:
a first value indicating that the protected function is required for the workflow and the access token is included in the workflow description, and
a second value indicating that the protected function is required for the workflow and a process of obtaining the access token is needed;
in case that the flag is set to the first value, obtaining the access token included in the workflow description without performing an authorization procedure for obtaining the access token;
in case that the flag is set to the second value, performing the authorization procedure for obtaining the access token using the source assistance information included in the client assistance descriptor;
accessing the protected function using the obtained access token; and
generating (S9030) the workflow based on the protected function.

2. A network-based media processing, NBMP, workflow manager network entity in a NBMP system, the NBMP workflow manager network entity comprising:
a transceiver (1110); and
at least one processor configured to control the transceiver (1110),
wherein the at least one processor is further configured to:
receive (9010), from an NBMP source network entity, a request for generating a workflow for a service and workflow description provided as the request, the workflow description including an authorization descriptor and a client assistance descriptor,
wherein the authorization descriptor includes information indicating whether a function associated with the workflow is a protected function,
wherein the authorization descriptor includes authentication method information indicating an authentication method used for an authentication for the protected function, and authorization -related information including a flag for indicating (S9020) whether an access token for authorizing access to the protected function is included in a workflow description,
wherein the flag is set to one of:
a first value indicating that the protected function is required for the workflow and the access token is included in the workflow description, and
a second value indicating that the protected function is required for the workflow and a process of obtaining the access token is needed,
in case that the flag is set to the first value, obtain the access token included in the workflow description without performing an authorization procedure for obtaining the access token;
in case that the flag is set to the second value, perform the authorization procedure for obtaining the access token using the source assistance information included in the client assistance descriptor,
access the protected function using the obtained access token, and
generate (S9030) the workflow based on the protected function.

3. A method of performing authentication by a network-based media processing, NBMP, source network entity in a NBMP system, the method comprising:
identifying (S1010, S4010b) whether a protected function associated with a workflow requires authorization for access;
performing (S1020, S4020b, S4030b) an authorization procedure for obtaining an access token for authorizing access to the protected function based on identifying that the protected function associated with the workflow requires authorization for access; and
transmitting (S1030, S4020b, S4030b), to an NBMP workflow manager network entity, a request for generating the workflow and workflow description as the request, the workflow description including an authorization descriptor and a client assistance descriptor,
wherein the authorization descriptor includes information indicating whether a function associated with the workflow is the protected function,
wherein the authorization descriptor includes authentication method information indicating an authentication method used for an authentication for the protected function, and authorization -related information including a flag for indicating whether the access token is included in the workflow description in the request,
wherein the flag is set to one of:
a first value indicating that the protected function is required for the workflow and the access token is included in the workflow description, and
a second value indicating that the protected function is required for the workflow and a process of obtaining the access token is needed using source assistance information included in the client assistance descriptor.

4. A network-based media processing, NBMP, source network entity in a NBMP system, the NBMP source network entity comprising:
a transceiver (1110); and
at least one processor (1120) configured to control the transceiver (1110),
wherein the at least one processor (1120) is further configured to:
identify (S1010, S4010b) whether a protected function associated with a workflow requires authorization for access,
perform (S1020, S4020b, S4030b) an authorization procedure for obtaining an access token for authorizing access to the protected function based on identifying that the function associated with the workflow requires authorization for access, and
transmit (S1030, S4020b, S4030b), to an NBMP workflow manager network entity, a request for generating the workflow and workflow description as the request, the workflow description including an authorization descriptor and a client assistance descriptor,
wherein the authorization descriptor includes information indicating whether a function associated with the workflow is the protected function,
wherein the authorization descriptor includes authentication method information indicating an authentication method used for an authentication for the protected function, and authorization -related information including a flag for indicating whether the access token is included in the workflow description in the request,
wherein the flag is set to one of:
a first value indicating that the protected function is required for the workflow and the access token is included in the workflow description, and
a second value indicating that the protected function is required for the workflow and a process of obtaining the access token is needed using source assistance information included in the client assistance descriptor.

## Patentansprüche

1. Verfahren zur Durchführung einer Authentifizierung durch eine Workflow-Manager-Netzwerkeinheit für die netzwerkbasierte Medienverarbeitung, NBMP, in einem NBMP-System, wobei das Verfahren umfasst:
Empfangen (S9010) einer Anforderung zum Erzeugen eines Workflows für einen Dienst und einer Workflow-Beschreibung, die als die Anforderung bereitgestellt wird, von einer NBMP-Quellennetzwerkeinheit, wobei die Workflow-Beschreibung einen Autorisierungsdeskriptor und einen Client-Unterstützungsdeskriptor umfasst,
wobei der Autorisierungsdeskriptor Informationen enthält, die angeben, ob eine dem Workflow zugeordnete Funktion eine geschützte Funktion ist,
wobei der Autorisierungsdeskriptor Authentifizierungsverfahrensinformationen, die ein für eine Authentifizierung für die geschützte Funktion verwendetes Authentifizierungsverfahren anzeigen, und autorisierungsbezogene Informationen, die ein Flag enthalten, das anzeigt (S9020), ob ein Zugriffs-Token zum Autorisieren des Zugriffs auf die geschützte Funktion in der Workflow-Beschreibung enthalten ist, umfasst,
wobei das Flag auf eines von Folgendem gesetzt ist:
einen ersten Wert, der anzeigt, dass die geschützte Funktion für den Workflow erforderlich ist und das Zugriffs-Token in der Workflow-Beschreibung enthalten ist, und
einen zweiten Wert, der anzeigt, dass die geschützte Funktion für den Workflow erforderlich ist und ein Verfahren zum Erhalten des Zugriffs-Tokens erforderlich ist;
für den Fall, dass das Flag auf den ersten Wert gesetzt ist, Erhalten des in der Workflow-Beschreibung enthaltenen Zugriffs-Tokens, ohne eine Autorisierungsprozedur zum Erhalten des Zugriffs-Tokens durchzuführen;
für den Fall, dass das Flag auf den zweiten Wert gesetzt ist, Durchführen der Autorisierungsprozedur zum Erhalten des Zugriffs-Tokens unter Verwendung der im Client-Unterstützungsdeskriptor enthaltenen Quellenunterstützungsinformationen;
Zugreifen auf die geschützte Funktion unter Verwendung des erhaltenen Zugriffs-Tokens; und
Erzeugen (S9030) des Workflow basierend auf der geschützten Funktion.

2. Workflow-Manager-Netzwerkeinheit für die netzwerkbasierte Medienverarbeitung, NBMP, in einem NBMP-System, wobei die NBMP Workflow-Manager-Netzwerkeinheit umfasst:
einen Transceiver (1110); und
mindestens einen Prozessor, der konfiguriert ist, um den Transceiver (1110) zu steuern,
wobei der mindestens eine Prozessor ferner konfiguriert ist zum:
Empfangen (9010) einer Anforderung zum Erzeugen eines Workflows für einen Dienst und einer Workflow-Beschreibung, die als die Anforderung bereitgestellt wird, von einer NBMP-Quellennetzwerkeinheit, wobei die Workflow-Beschreibung einen Autorisierungsdeskriptor und einen Client-Unterstützungsdeskriptor umfasst,
wobei der Autorisierungsdeskriptor Informationen enthält, die angeben, ob eine dem Workflow zugeordnete Funktion eine geschützte Funktion ist,
wobei der Autorisierungsdeskriptor Authentifizierungsverfahrensinformationen, die ein für eine Authentifizierung für die geschützte Funktion verwendetes Authentifizierungsverfahren anzeigen, und autorisierungsbezogene Informationen, die ein Flag enthalten, das anzeigt (S9020), ob ein Zugriffs-Token zum Autorisieren des Zugriffs auf die geschützte Funktion in der Workflow-Beschreibung enthalten ist, umfasst,
wobei das Flag auf eines von Folgendem gesetzt ist:
einen ersten Wert, der anzeigt, dass die geschützte Funktion für den Workflow erforderlich ist und das Zugriffs-Token in der Workflow-Beschreibung enthalten ist, und
einen zweiten Wert, der anzeigt, dass die geschützte Funktion für den Workflow erforderlich ist und ein Verfahren zum Erhalten des Zugriffs-Tokens erforderlich ist,
für den Fall, dass das Flag auf den ersten Wert gesetzt ist, Erhalten des in der Workflow-Beschreibung enthaltenen Zugriffs-Tokens, ohne eine Autorisierungsprozedur zum Erhalten des Zugriffs-Tokens durchzuführen;
für den Fall, dass das Flag auf den zweiten Wert gesetzt ist, Durchführen der Autorisierungsprozedur zum Erhalten des Zugriffs-Tokens unter Verwendung der im Client-Unterstützungsdeskriptor enthaltenen Quellenunterstützungsinformationen,
Zugreifen auf die geschützte Funktion unter Verwendung des erhaltenen Zugriffs-Tokens, und
Erzeugen (S9030) des Workflows basierend auf der geschützten Funktion.

3. Verfahren zum Durchführen einer Authentifizierung durch eine Quellennetzwerkeinheit für die netzwerkbasierte Medienverarbeitung, NBMP, in einem NBMP-System, wobei das Verfahren umfasst:
Identifizieren (S1010, S4010b), ob eine geschützte Funktion, die einem Workflow zugeordnet ist, eine Autorisierung für den Zugriff erfordert;
Durchführen (S1020, S4020b, S4030b) einer Autorisierungsprozedur zum Erhalten eines Zugriffs-Tokens zum Autorisieren des Zugriffs auf die geschützte Funktion basierend auf Identifizieren, dass die geschützte Funktion, die dem Workflow zugeordnet ist, eine Autorisierung für den Zugriff erfordert; und
Übertragen (S1030, S4020b, S4030b) einer Anforderung zum Erzeugen des Workflows und der Workflow-Beschreibung als Anforderung an eine NBMP-Workflow-Manager-Netzwerkeinheit, wobei die Workflow-Beschreibung einen Autorisierungsdeskriptor und einen Client-Unterstützungsdeskriptor umfasst,
wobei der Autorisierungsdeskriptor Informationen enthält, die angeben, ob eine dem Workflow zugeordnete Funktion die geschützte Funktion ist,
wobei der Autorisierungsdeskriptor Authentifizierungsverfahrensinformationen, die ein Authentifizierungsverfahren angeben, das für eine Authentifizierung für die geschützte Funktion verwendet wird, sowie autorisierungsbezogene Informationen, die ein Flag enthalten, das angibt, ob das Zugriffs-Token in der Workflow-Beschreibung der Anforderung enthalten ist, umfasst,
wobei das Flag auf eines von Folgendem gesetzt ist:
einen ersten Wert, der anzeigt, dass die geschützte Funktion für den Workflow erforderlich ist und das Zugriffs-Token in der Workflow-Beschreibung enthalten ist, und
einen zweiten Wert, der anzeigt, dass die geschützte Funktion für den Workflow erforderlich ist und ein Verfahren zum Erhalten des Zugriffs-Tokens unter Verwendung der im Client-Unterstützungsdeskriptor enthaltenen Quellenunterstützungsinformationen erforderlich ist.

4. Quellennetzwerkeinheit für die netzwerkbasierte Medienverarbeitung, NBMP, in einem NBMP-System, wobei die NBMP-Quellennetzwerkeinheit umfasst:
einen Transceiver (1110); und
mindestens einen Prozessor (1120), der konfiguriert ist, um den Transceiver (1110) zu steuern,
wobei der mindestens eine Prozessor (1120) ferner konfiguriert ist zum:
Identifizieren (S1010, S4010b), ob eine geschützte Funktion, die einem Workflow zugeordnet ist, eine Autorisierung für den Zugriff erfordert,
Durchführen (S1020, S4020b, S4030b) einer Autorisierungsprozedur zum Erhalten eines Zugriffs-Tokens zum Autorisieren des Zugriffs auf die geschützte Funktion basierend auf Identifizieren, dass die Funktion, die dem Workflow zugeordnet ist, eine Autorisierung für den Zugriff erfordert, und
Übertragen (S1030, S4020b, S4030b) einer Anforderung zum Erzeugen des Workflows und der Workflow-Beschreibung als Anforderung an eine NBMP-Workflow-Manager-Netzwerkeinheit, wobei die Workflow-Beschreibung einen Autorisierungsdeskriptor und einen Client-Unterstützungsdeskriptor umfasst,
wobei der Autorisierungsdeskriptor Informationen enthält, die angeben, ob eine dem Workflow zugeordnete Funktion die geschützte Funktion ist,
wobei der Autorisierungsdeskriptor Authentifizierungsverfahrensinformationen, die ein Authentifizierungsverfahren angeben, das für eine Authentifizierung für die geschützte Funktion verwendet wird, sowie autorisierungsbezogene Informationen, die ein Flag enthalten, das angibt, ob das Zugriffs-Token in der Workflow-Beschreibung der Anforderung enthalten ist, umfasst,
wobei das Flag auf eines von Folgendem gesetzt ist:
einen ersten Wert, der anzeigt, dass die geschützte Funktion für den Workflow erforderlich ist und das Zugriffs-Token in der Workflow-Beschreibung enthalten ist, und
einen zweiten Wert, der anzeigt, dass die geschützte Funktion für den Workflow erforderlich ist und ein Verfahren zum Erhalten des Zugriffs-Tokens unter Verwendung der im Client-Unterstützungsdeskriptor enthaltenen Quellenunterstützungsinformationen erforderlich ist.

## Revendications

1. Procédé permettant d'effectuer une authentification par une entité de réseau de gestionnaire de flux de travail de traitement de média basé sur un réseau, NBMP, dans un système NBMP, le procédé comprenant :
recevoir (S9010), depuis une entité de réseau de source NBMP, une requête de génération d'un flux de travail pour un service et une description de flux de travail fournie en tant que requête, la description de flux de travail comprenant un descripteur d'autorisation et un descripteur d'assistance au client,
dans lequel le descripteur d'autorisation comprend des informations indiquant si une fonction associée au flux de travail est une fonction protégée,
dans lequel le descripteur d'autorisation comprend des informations de procédé d'authentification indiquant un procédé d'authentification utilisé pour une authentification de la fonction protégée, et des informations relatives à l'autorisation comprenant un indicateur indiquant (S9020) si un jeton d'accès pour autoriser l'accès à la fonction protégée est inclus dans la description de flux de travail,
dans lequel l'indicateur est réglé sur l'un de ce qui suit :
une première valeur indiquant que la fonction protégée est requise pour le flux de travail et que le jeton d'accès est inclus dans la description de flux de travail, et
une deuxième valeur indiquant que la fonction protégée est requise pour le flux de travail et qu'un processus d'obtention du jeton d'accès est nécessaire ;
dans le cas où l'indicateur est réglé sur la première valeur, obtenir un jeton d'accès inclus dans la description de flux de travail sans effectuer de procédure d'autorisation pour obtenir le jeton d'accès ;
dans le cas où l'indicateur est réglé à la deuxième valeur, effectuer la procédure d'autorisation pour obtenir le jeton d'accès en utilisant les informations d'assistance à la source incluses dans le descripteur d'assistance au client ;
accéder à la fonction protégée en utilisant le jeton d'accès obtenu ; et
générer (S9030) le flux de travail en se basant sur la fonction protégée.

2. Entité de réseau de gestionnaire de flux de travail de traitement de média basé sur un réseau, NBMP, dans un système NBMP, l'entité de réseau de gestionnaire de flux de travail NBMP comprenant :
un émetteur-récepteur (1110) ; et
au moins un processeur configuré pour commander l'émetteur-récepteur (1110),
dans lequel l'au moins un processeur est en outre configuré pour :
recevoir (9010), depuis une entité de réseau de source NBMP, une requête de génération d'un flux de travail pour un service et une description de flux de travail fournie en tant que requête, la description de flux de travail comprenant un descripteur d'autorisation et un descripteur d'assistance au client,
dans lequel le descripteur d'autorisation comprend des informations indiquant si une fonction associée au flux de travail est une fonction protégée,
dans lequel le descripteur d'autorisation comprend des informations de procédé d'authentification indiquant un procédé d'authentification utilisé pour une authentification de la fonction protégée, et des informations relatives à l'autorisation comprenant un indicateur pour indiquer (S9020) si un jeton d'accès pour autoriser l'accès à la fonction protégée est inclus dans la description de flux de travail,
dans lequel l'indicateur est réglé sur l'un de ce qui suit :
une première valeur indiquant que la fonction protégée est requise pour le flux de travail et que le jeton d'accès est inclus dans la description de flux de travail, et
une deuxième valeur indiquant que la fonction protégée est requise pour le flux de travail et qu'un processus d'obtention du jeton d'accès est nécessaire,
dans le cas où l'indicateur est réglé sur la première valeur, obtenir un jeton d'accès inclus dans la description de flux de travail sans effectuer de procédure d'autorisation pour obtenir le jeton d'accès ;
dans le cas où l'indicateur est réglé à la deuxième valeur, effectuer la procédure d'autorisation pour obtenir le jeton d'accès en utilisant les informations d'assistance à la source incluses dans le descripteur d'assistance au client,
accéder à la fonction protégée en utilisant le jeton d'accès obtenu, et
générer (S9030) le flux de travail en se basant sur la fonction protégée.

3. Procédé permettant d'effectuer une authentification par une entité de réseau de source de traitement de média basé sur un réseau, NBMP, dans un système NBMP, le procédé comprenant :
déterminer (S1010, S4010b) si une fonction protégée associée à un flux de travail nécessite une autorisation d'accès ;
exécuter (S1020, S4020b, S4030b) une procédure d'autorisation pour obtenir un jeton d'accès pour autoriser l'accès à la fonction protégée en se basant sur l'identification que la fonction protégée associée au flux de travail nécessite une autorisation d'accès ; et
transmettre (S1030, S4020b, S4030b), à une entité de réseau de gestionnaire de flux de travail NBMP, une requête de génération du flux de travail et de la description de flux de travail en tant que requête, la description de flux de travail comprenant un descripteur d'autorisation et un descripteur d'assistance au client,
dans lequel le descripteur d'autorisation comprend des informations indiquant si une fonction associée au flux de travail est la fonction protégée,
dans lequel le descripteur d'autorisation comprend des informations de procédé d'authentification indiquant un procédé d'authentification utilisé pour une authentification de la fonction protégée, et des informations relatives à l'autorisation comprenant un indicateur pour indiquer si le jeton d'accès est inclus dans la description de flux de travail dans la requête,
dans lequel l'indicateur est réglé sur l'un de ce qui suit :
une première valeur indiquant que la fonction protégée est requise pour le flux de travail et que le jeton d'accès est inclus dans la description de flux de travail, et
une deuxième valeur indiquant que la fonction protégée est requise pour le flux de travail et qu'un processus d'obtention du jeton d'accès est nécessaire en utilisant des informations d'assistance à la source incluses dans le descripteur d'assistance au client.

4. Entité de réseau de source de traitement de média basé sur le réseau, NBMP, dans un système NBMP, l'entité de réseau de source NBMP comprenant :
un émetteur-récepteur (1110) ; et
au moins un processeur (1120) configuré pour commander l'émetteur-récepteur (1110),
dans lequel l'au moins un processeur (1120) est en outre configuré pour :
déterminer (S1010, S4010b) si une fonction protégée associée à un flux de travail nécessite une autorisation d'accès,
exécuter (S1020, S4020b, S4030b) une procédure d'autorisation pour obtenir un jeton d'accès pour autoriser l'accès à la fonction protégée en se basant sur l'identification que la fonction protégée associée au flux de travail nécessite une autorisation d'accès, et
transmettre (S1030, S4020b, S4030b), à une entité de réseau de gestionnaire de flux de travail NBMP, une requête de génération du flux de travail et de la description de flux de travail en tant que requête, la description de flux de travail comprenant un descripteur d'autorisation et un descripteur d'assistance au client,
dans lequel le descripteur d'autorisation comprend des informations indiquant si une fonction associée au flux de travail est la fonction protégée,
dans lequel le descripteur d'autorisation comprend des informations de procédé d'authentification indiquant un procédé d'authentification utilisé pour une authentification de la fonction protégée, et des informations relatives à l'autorisation comprenant un indicateur pour indiquer si le jeton d'accès est inclus dans la description de flux de travail dans la requête,
dans lequel l'indicateur est réglé sur l'un de ce qui suit :
une première valeur indiquant que la fonction protégée est requise pour le flux de travail et que le jeton d'accès est inclus dans la description de flux de travail, et
une deuxième valeur indiquant que la fonction protégée est requise pour le flux de travail et qu'un processus d'obtention du jeton d'accès est nécessaire en utilisant des informations d'assistance à la source incluses dans le descripteur d'assistance au client.
